# FASCICULE DE BREVET EUROPEEN

(11) **EP 3 159 225 B1**
(45) Date de publication et mention de la délivrance du brevet: **05.06.2019**
(21) Numéro de dépôt: 16193138.1
(22) Date de dépôt: 10.10.2016
(51) Int. Cl.: B60S 1/40, B60S 1/38

(54) **DISPOSITIF DE CONNEXION POUR BALAI D'ESSUIE-GLACE**
VERBINDUNGSVORRICHTUNG FÜR SCHEIBENWISCHERARM
CONNECTION DEVICE FOR A WINDSCREEN WIPER BLADE

(30) Priorité: 22.10.2015 FR 1560056; 22.10.2015 FR 1560055
(43) Date de publication de la demande: 26.04.2017
(73) Titulaire: Valeo Systèmes d'Essuyage, 78322 Le Mesnil Saint Denis (FR)
(72) Inventeur: MOULEYRE, Guillaume, 63122 Saint Genès Champanelle (FR); TERRASSE, William, 63270 VIC LE COMTE (FR); HANINO, Marie-Therese, 63270 Parent (FR); MONEYRON, Patrick, 63670 LE CENDRE (FR); ESPINASSE, Philippe, 63114 COUDES (FR)
(74) Mandataire: Vincent, Catherine Marie Marguerite

(56) Documents cités:
- EP-A1- 1 795 406
- EP-A1- 1 847 425
- DE-A1-102009 001 025
- DE-A1-102012 209 956
- DE-U1-202009 013 452
- DE-U1-202012 100 430
- US-A1- 2013 007 975
- US-A1- 2013 192 016
- US-A1- 2015 089 764
- US-A1- 2015 166 016
- US-A1- 2015 251 635

## Description

La présente invention se rapporte au domaine des dispositifs essuie-glaces pour véhicules automobiles et concerne, plus particulièrement, les dispositifs de connexion destinés à relier mécaniquement un balai d'essuyage à un bras d'entraînement d'un tel dispositif essuie-glace.

Les essuie-glaces pour véhicules automobiles sont conçus pour retirer, par balayage, les liquides et salissures qui peuvent perturber la vision que le conducteur a de son environnement. Ces essuie-glaces comprennent généralement un bras d'entraînement qui effectue un mouvement de va-et-vient angulaire, et des balais allongés équipés de lames racleuses réalisées dans un matériau élastique. En frottant contre une surface vitrée, ces lames en balaient l'eau et un certain nombre de salissures, et les évacuent en dehors du champ de vision du conducteur.

Quelle que soit la configuration du balai d'essuie-glace, celui-ci est rattaché au bras d'entraînement par un ensemble de connexion qui comprend généralement au moins un connecteur et un adaptateur. Le connecteur est solidarisé au balai, et l'adaptateur est une pièce qui est configurée, d'une part, pour coopérer avec le connecteur et, d'autre part, pour être engagée avec une pièce terminale du bras d'entraînement. Connecteur et adaptateur coopèrent pour réaliser la fixation du balai sur le bras d'entraînement et la liaison articulée entre ces deux ensembles.

Dans le marché de l'après-vente des balais d'essuie-glaces, il est connu de proposer un même balai, vendu équipé de son propre connecteur, pour plusieurs types de bras d'essuie-glaces. Il convient donc de concevoir un adaptateur utilisable avec le plus grand nombre possible de types de bras et de types de connexions, puisque c'est l'adaptateur qui forme l'interface entre le connecteur qui pré-équipe le balai et chaque type de pièce terminale de bras d'entraînement. Au souhait de disposer d'un adaptateur apte à être utilisé sur la plus grande variété possible de bras et de types de connexions s'ajoute également le souhait de disposer d'adaptateurs aptes à être utilisés quel que soit le côté de direction du véhicule, c'est-à-dire quel que soit le côté de circulation, droit ou gauche, du véhicule sur la chaussée. En effet, le côté de circulation du véhicule sur la chaussée conditionne le côté, droit ou gauche, duquel est implanté le volant sur le véhicule, et donc, le sens dans lequel s'effectuera préférentiellement le balayage, par exemple du pare-brise, par un balai d'essuie-glace.

Parmi ces variétés de bras et de pièces terminales, on connaît en particulier celles du type connu sous la dénomination anglo-saxonne "side-lock". Dans le principe, une pièce terminale de ce type comporte un arbre et une broche sensiblement en forme de « L ». L'arbre sert ici d'axe de pivotement entre le bras et le balai d'essuie-glace, et la broche sécurise la liaison mécanique entre le bras et le balai, en bloquant le mouvement dans la direction de l'axe de l'arbre. Il existe actuellement deux tailles de connexions de type "side-lock" selon les dimensions de la broche : l'une connue sous la dénomination "side-lock standard", et l'autre connue sous la dénomination "side-lock étroit" EP-A-1795406 montre le préambule de la revendication 1.

La présente invention a pour but de réaliser une connexion mécanique fiable et durable entre connecteur et adaptateur respectivement d'un balai d'essuyage et d'un bras d'essuie-glace, tout en pouvant être appliquée à une grande variété de pièces terminales de bras d'essuie-glaces, parmi lesquelles les pièces terminales correspondant à des connexions du type connu sous l'appellation "side-lock", quelle que soit leur taille et quel que soit leur sens de connexion, et qui puisse également être appliquée aux différents sens de montage du balai et du bras d'essuie-glace en fonction du côté où est placée la direction du véhicule

Dans ce but, l'invention propose un dispositif de connexion pour la liaison mécanique d'un balai d'essuyage à un bras d'entraînement d'essuie-glaces de véhicule automobile, qui comprend un connecteur destiné à être rendu solidaire d'un balai d'essuyage et un adaptateur destiné à relier le connecteur à une pièce terminale du bras d'entraînement, dans lequel le connecteur comprend au moins un trou par lequel passe un axe de pivotement du balai d'essuyage par rapport au bras d'entraînement, le trou du connecteur étant délimité par au moins un flanc du connecteur, l'adaptateur comprenant au moins un logement traversant dans lequel s'étend au moins en partie le flanc. Selon l'invention, le logement traversant accueille, lorsque connecteur et adaptateur sont assemblés, une partie supérieure du connecteur

Selon un autre de ses aspects, l'invention propose un dispositif de connexion pour la liaison mécanique d'un balai d'essuyage à un bras d'entraînement d'essuie-glaces de véhicule automobile, qui comprend un connecteur destiné à être rendu solidaire d'un balai d'essuyage et un adaptateur destiné à relier le connecteur au bras d'entraînement. Dans le dispositif selon l'invention, le connecteur comprend au moins un trou apte à recevoir un arbre du bras d'entraînement, et l'adaptateur comprend au moins un palier de rotation apte à recevoir l'arbre du bras d'entraînement, ainsi que des moyens permettant la fixation de cet adaptateur sur le connecteur. Dans le dispositif selon l'invention, l'adaptateur comprend en outre au moins une cavité sensiblement perpendiculaire à un axe passant par le palier de rotation et destinée à recevoir une broche du bras d'entraînement. De plus, selon l'invention, le palier de rotation, le trou apte à recevoir l'arbre du bras d'entraînement et les moyens de fixation de l'adaptateur sur le connecteur sont coaxiaux.

Le dispositif de connexion comprend avantageusement les caractéristiques suivantes prises seules ou en combinaison :
- le logement traversant est ménagé dans une face supérieure délimitant l'adaptateur,
- le logement traversant est délimité par un bord fermé,
- le logement traversant est centré sur l'adaptateur, selon un axe longitudinal dudit adaptateur, et borde deux parties sensiblement planes de la face supérieure et deux parties sensiblement convexes délimitant la face supérieure de l'adaptateur,
- le logement traversant présente, en projection sur un plan parallèle aux première et deuxième parties sensiblement planes de la face supérieure, une section sensiblement rectangulaire dont le grand côté est parallèle à l'axe longitudinal de l'adaptateur et dont le petit côté est sensiblement parallèle à l'axe de pivotement,
- le logement traversant est ménagé dans une première et une deuxième parties convexes que comprend la face supérieure de l'adaptateur,
- l'adaptateur est délimité par un premier et un deuxième flancs latéraux, au moins l'un desdits flancs latéraux présente un épaulement ménagé sur un bord opposé au bord par lequel le flanc latéral est rattaché à la face supérieure de l'adaptateur,
- chacun des premier et deuxième flancs latéraux de l'adaptateur présente un épaulement, qui délimite notamment une échancrure apte à recevoir une broche du bras d'entraînement,
- au moins une fente longitudinale est ménagée dans la face supérieure de l'adaptateur,
- au moins une fente longitudinale est ménagée sur l'une au moins des première ou deuxième parties sensiblement planes de la face supérieure de l'adaptateur,
- au moins une fente longitudinale est ménagée sur la deuxième partie convexe de la face supérieure de l'adaptateur,
- quatre fentes, avantageusement traversantes, sont ménagées dans la face supérieure de l'adaptateur, symétriquement réparties à la fois par rapport à un plan médian longitudinal perpendiculaire aux parties sensiblement planes de la face supérieure et par rapport à un plan médian transversal perpendiculaire aux premier et deuxième flancs latéraux de l'adaptateur,
- l'adaptateur comporte un premier et un deuxième flancs d'extrémité, qui s'étendent transversalement, sensiblement perpendiculairement aux premier et deuxième flancs latéraux, et en ce que, à son côté opposé au côté par lequel il est rattaché à la face supérieure de l'adaptateur, l'un au moins des flancs d'extrémité présente une échancrure, de forme générale sensiblement rectangulaire et qui s'étend en direction de la face supérieure,
- l'adaptateur est délimité par au moins un premier flanc latéral et par un deuxième flanc latéral, un palier de rotation étant ménagé dans lesdits premier et deuxième flancs latéraux pour recevoir un arbre du bras d'entraînement,
- le palier de rotation est formé par au moins un orifice traversant les premier et deuxième flancs latéraux, de section circulaire, et en ce que les orifices traversants sont coaxiaux et de même diamètre, leurs centres étant alignés selon l'axe de pivotement,
- les centres des orifices traversants sont placés sensiblement au milieu de l'adaptateur selon la direction longitudinale de celui-ci,
- les centres des orifices traversants sont alignés avec l'axe transversal de la première partie convexe de la face supérieure de l'adaptateur,
- un premier et un deuxième torons cylindriques s'étendent, coaxialement aux orifices traversants, au sein d'une cavité délimitée par les premier et deuxième flancs latéraux, des premier et deuxième flancs d'extrémité, et la face supérieure de l'adaptateur,
- les premier et deuxième torons cylindriques sont de même diamètre intérieur que les premier et deuxième orifices traversants, placés en regard l'un de l'autre et s'étendant sensiblement l'un vers l'autre au sein du volume de ladite cavité,
- chacun des torons cylindriques s'étend, à l'intérieur de la cavité, entre la paroi intérieure de l'un des premier ou deuxième flancs latéraux et une nervure de renfort configurée parallèlement audit premier ou deuxième flanc latéral et s'étendant, sur toute la longueur de l'adaptateur, entre les bords intérieurs de chacune des échancrures ménagées respectivement dans le premier et dans le deuxième flanc d'extrémité,
- chacun des premier et deuxième torons cylindriques débouche, à l'une de ses extrémités, dans la paroi intérieure du flanc latéral correspondant et débouche, à son autre extrémité, au niveau de la nervure de renfort correspondante en traversant cette dernière et en formant, à la surface de ladite nervure de renfort, un bourrelet cylindrique, dont l'axe est confondu avec l'axe de pivotement,
- le profil de la face supérieure de l'adaptateur, au droit de chacun des orifices traversants, est identique au profil d'une paroi supérieure du flanc du connecteur au droit du trou,
   la liaison mécanique entre le connecteur et l'adaptateur est réalisée par engagement de bourrelets cylindriques dans le trou,- la cavité est délimitée par un bord fermé, et présente avantageusement une section sensiblement rectangulaire,
- l'adaptateur a une forme générale sensiblement parallélépipédique, allongée selon une direction parallèle à celle d'un axe longitudinal du balai d'essuyage, et il comporte un premier et un deuxième flancs latéraux, symétriquement disposés par rapport à cet axe longitudinal,
- au moins un des premier ou deuxième flancs latéraux de l'adaptateur comporte un épaulement définissant, sur le flanc latéral concerné, un dégagement apte à recevoir, par exemple en appui, une extrémité d'une broche d'une pièce terminale d'un bras dans une première variante d'une connexion de type "side-lock standard". Selon un mode de réalisation préféré de l'invention, un tel dégagement est agencé sur chacun des flancs latéraux de l'adaptateur, offrant ainsi la possibilité d'utiliser le même dispositif de connexion selon l'invention pour un balai d'essuyage monté sur un bras d'entrainement côté conducteur, côté passager, selon un mouvement angulaire identique ou antagoniste « dit papillon »,
- le bord fermé de la cavité est ménagé dans une partie d'une face supérieure de l'adaptateur,
- l'adaptateur est délimité par des faces latérales, et il comprend au moins un dégagement ménagé dans une de celles-ci, le dégagement étant agencé pour recevoir une broche d'un bras d'entraînement,
- l'adaptateur comprend au moins un dégagement sur chacune de ses faces latérales,
- le palier de rotation comprend un premier palier et un deuxième palier coaxiaux, le premier palier étant séparé du deuxième palier par un évidement qui débouche sur la face supérieure de l'adaptateur,
- au moins une portion du connecteur s'étend dans l'évidement de l'adaptateur, entre le premier palier et le deuxième palier de rotation,
- l'adaptateur délimite au moins deux volumes intérieurs, chacun des volumes intérieurs étant ménagé dans le prolongement longitudinal, selon l'axe longitudinal de l'adaptateur, de chaque palier de rotation formé dans ledit adaptateur,
- les deux volumes intérieurs sont ménagés d'un même côté de l'adaptateur, entre, d'une part, l'axe transversal commun aux paliers de rotation, au trou transversal et au moyen de fixation, et, d'autre part, un flanc terminal,
- l'adaptateur comprend quatre volumes intérieurs ménagés deux à deux de chaque côté de l'axe transversal et de l'axe longitudinal de l'adaptateur,
- le moyen de fixation de l'adaptateur sur le connecteur prend la forme de torons cylindriques issus de l'adaptateur et reçus dans au moins un trou complémentaire ménagé dans le connecteur,
- le moyen de fixation de l'adaptateur sur le connecteur est formé par des torons cylindriques, qui s'étendent, de l'adaptateur vers le connecteur, coaxialement aux paliers de rotation,
- l'adaptateur comprend, sur au moins un de ses flancs terminaux, une échancrure avantageusement de profil rectangulaire,
- la face supérieure de l'adaptateur, au droit du palier de rotation, suit un profil similaire à celui d'une paroi supérieure du connecteur au droit de la portion centrale de ce dernier dans laquelle est ménagé le trou transversal.

L'invention vise également un balai d'essuyage pour véhicule, caractérisé en ce qu'il comprend un dispositif de connexion tel que décrit ci-dessus. Un tel balai d'essuyage peut comprendre un support et une lame racleuse, dans lequel le support prend la forme d'au moins une lame métallique courbée, et dans lequel le dispositif de connexion est rendu solidaire du balai d'essuyage sensiblement en partie centrale de celui-ci.

L'invention couvre encore un système d'essuyage pour véhicule, comprenant au moins un balai d'essuyage tel qu'évoqué dans le paragraphe précédent, attaché à un bras d'entraînement par un dispositif de connexion décrit ci-dessus, un arbre porté par une pièce terminale du bras d'entraînement étant logé dans le palier de rotation de l'adaptateur, une broche étant reçue dans la cavité. Un même dispositif de connexion coopère avec un autre bras d'entraînement qui comporte un arbre porté par une pièce terminale du bras d'entraînement logé dans le palier de rotation de l'adaptateur, une broche étant reçue dans un dégagement ménagé dans un flanc latéral de l'adaptateur.

D'autres caractéristiques, détails et avantages de l'invention ressortiront plus clairement à la lecture de la description donnée ci-après à titre indicatif, en relation avec les dessins suivants :
- la figure 1 est une vue générale, en perspective, d'un balai d'essuyage équipé d'un dispositif de connexion selon l'invention,
- la figure 2 est une vue en perspective d'un adaptateur d'un dispositif de connexion selon l'invention, dans un premier mode de réalisation,
- la figure 3 est une vue de dessous d'un adaptateur d'un dispositif selon l'invention, dans le premier mode de réalisation illustré par la figure 2,
- la figure 4 est une vue en perspective simplifiée d'un adaptateur d'un dispositif de connexion dans un deuxième mode de réalisation non revendiqué,
- La figure 5 est une vue en perspective d'un connecteur d'un dispositif de connexion selon l'invention,
- la figure 6 est une vue en perspective d'un dispositif de connexion selon l'invention dans lequel le connecteur et l'adaptateur selon le premier mode de réalisation, tel qu'illustré par les figures 2 et 3, sont assemblés sur un balai d'essuyage,
- la figure 7 est une vue de face illustrant les différentes possibilités de liaison entre le connecteur et l'adaptateur tel que selon le deuxième mode de réalisation représenté par la figure 4,
- la figure 8 est une vue en perspective de l'assemblage d'un dispositif de connexion selon l'invention, dans lequel l'adaptateur est celui illustré par le premier mode de réalisation représenté par les figures 2 et 3, avec une pièce terminale d'un bras d'essuie-glace dans une connexion de type "side-lock étroit",
- la figure 9 est une vue en perspective de l'ensemble représenté par la figure 8, en position assemblé,
- la figure 10 est une vue en perspective de l'assemblage d'un dispositif de connexion selon l'invention, dans lequel l'adaptateur est celui illustré par le premier mode de réalisation représenté par les figures 2 et 3, avec une pièce terminale d'un bras d'essuie-glace dans une connexion de type "side-lock standard".

Il faut tout d'abord noter que les figures exposent l'invention de manière détaillée pour la mettre en oeuvre, lesdites figures pouvant bien entendu servir à mieux définir l'invention le cas échéant.

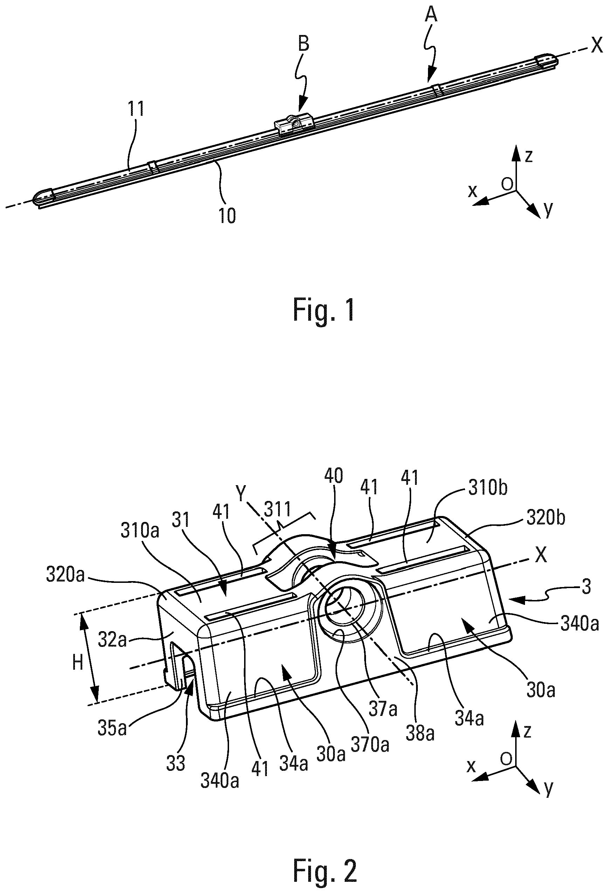

Dans la suite de la description, les dénominations longitudinales ou latérales, dessus, dessous, devant, derrière se réfèrent à l'orientation du balai d'essuyage et du dispositif de connexion selon l'invention. La direction longitudinale, matérialisée par l'axe X sur la Figure 1, correspond à la direction de l'axe principal du balai d'essuyage A dans laquelle il s'étend. Les orientations latérales correspondent à des droites concourantes, c'est-à-dire qui croisent la direction longitudinale, notamment perpendiculairement à l'axe longitudinal X du balai d'essuyage A pour définir le plan de déplacement du bras d'entraînement dans son mouvement de va-et-vient angulaire. Les directions référencées comme verticales, supérieures ou inférieures correspondent à des directions perpendiculaires au plan dans lequel le bras d'entraînement effectue son mouvement de va-et-vient angulaire, la dénomination inférieure contenant le plan de la surface à essuyer.

Les directions évoquées ci-dessus sont également visibles dans un repère orthonormé (Oxyz) représenté sur les figures. Dans ce repère, la direction (Ox) est celle de l'axe longitudinal X dans lequel s'étend en longueur le balai d'essuyage, la direction (Oy) est la direction transversale, perpendiculaire à la direction (Ox), qui définit, avec la direction (Ox), le plan dans lequel se déplace le bras d'entraînement de l'essuie-glace dans son mouvement de va-et-vient angulaire, et la direction (Oz) est la direction verticale, perpendiculaire aux directions (Ox) et (Oy).

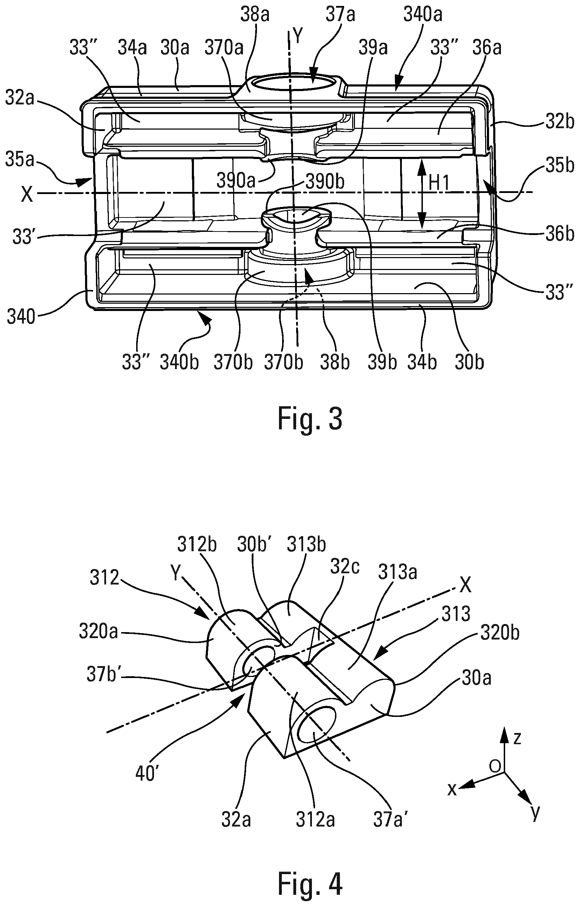

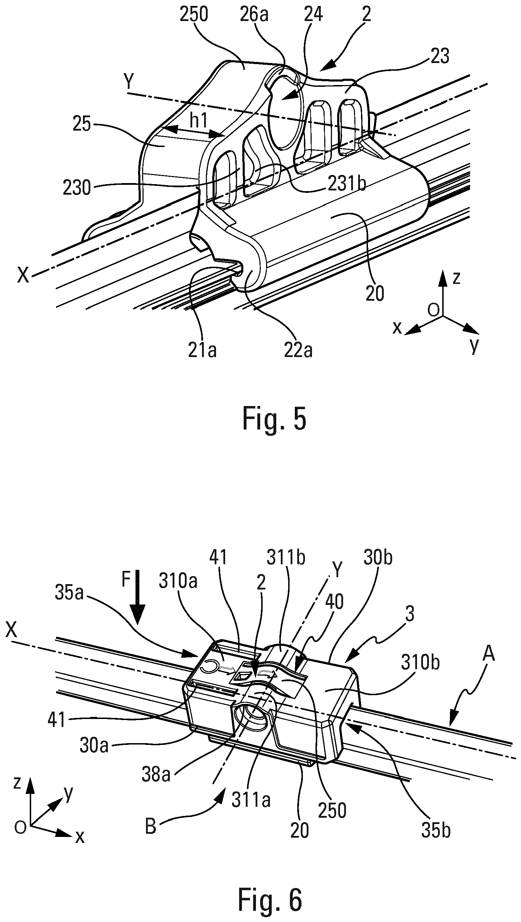

Le balai d'essuyage A représenté sur la figure 1 comprend, s'étendant selon son axe longitudinal X, une lame racleuse 10, par exemple réalisée dans un matériau élastomère, et un ensemble de rigidification de celle-ci formant un support du balai d'essuyage A. Ce support peut, à titre d'exemple non exhaustif, consister en une lame métallique qui permet d'appliquer le balai sur la surface à essuyer tout en le rigidifiant. Selon le mode de réalisation illustré par la figure 1, un déflecteur aérodynamique supérieur 11 est associé à l'ensemble de rigidification, afin d'améliorer le plaquage du balai A sur la surface à essuyer et, ainsi améliorer la qualité du balayage opéré par le balai d'essuyage A. Le balai d'essuyage A est muni, sensiblement en sa zone centrale selon son axe longitudinal X, d'un ensemble de connexion B selon l'invention. L'ensemble de connexion B comprend un connecteur 2, représenté en perspective par la figure 5, et un adaptateur 3, représenté par les figures 2 et 3.

En référence aux différentes figures, l'adaptateur 3 selon l'invention a une forme générale sensiblement parallélépipédique, allongée notamment selon une direction parallèle à la direction de l'axe longitudinal X du balai d'essuyage A. Avantageusement, l'adaptateur 3 est constitué de matière synthétique et est, par exemple, fabriqué par injection d'un matériau polymère dans un moule approprié.

L'adaptateur 3 comporte un premier flanc latéral 30a et un deuxième flanc latéral 30b, symétriquement répartis par rapport à un plan médian contenant l'axe longitudinal X et la direction verticale Oz, et s'étendant sensiblement parallèlement à un tel plan. En d'autres termes, chacun des premier et deuxième flancs latéraux 30a, 30b est sensiblement parallèle au plan (Oxz) du repère orthonormé défini plus haut.

Les premier et deuxième flancs latéraux 30a et 30b sont en particulier réunis par une face supérieure de l'adaptateur 3.

Les premier et deuxième flancs latéraux 30a et 30b sont notamment réunis par une face supérieure 31 pour former un profil sensiblement en forme de "U" renversé.

La face supérieure 31 comporte par exemple, comme illustré aux figures 2 et 3, une première et une deuxième parties, respectivement référencées 310a et 310b, sensiblement planes et perpendiculaires au plan général selon lequel s'étendent les premier et deuxième flancs latéraux 30a et 30b. Les première et deuxième parties sensiblement planes 310a, 310b de la face supérieure 31 sont donc sensiblement parallèles au plan (Oxy) du repère orthonormé défini plus haut. Les première et deuxième parties planes, 310a, 310b sont symétriquement disposées autour d'une partie centrale convexe 311 dont la forme est celle d'une portion de l'enveloppe d'un cylindre centré sur un axe transversal Y perpendiculaire à l'axe longitudinal X et parallèle au plan général selon lequel s'étendent sensiblement les parties planes de la face supérieure, c'est-à-dire, parallèle à la direction de l'axe (Oy) du repère orthonormé défini plus haut.

L'adaptateur 3 comporte un premier flanc latéral 30a et un deuxième flanc latéral 30b, symétriquement répartis par rapport à un plan médian contenant l'axe longitudinal X et la direction verticale Oz, et s'étendant sensiblement parallèlement à un tel plan. En d'autres termes, chacun des premier et deuxième flancs latéraux 30a, 30b est sensiblement parallèle au plan (Oxz) du repère orthonormé défini plus haut.

Selon le premier mode de réalisation illustré par les figures 2 et 3, les première et deuxième parties planes, 310a, 310b, de la face supérieure 31 sont symétriquement disposées, selon la direction longitudinale, autour d'une partie centrale convexe 311 dont la forme est celle d'une portion de l'enveloppe d'un cylindre centré sur un axe transversal perpendiculaire à l'axe longitudinal X et parallèle au plan général selon lequel s'étendent sensiblement les parties planes de la face supérieure, c'est-à-dire, parallèle à la direction de l'axe (Oy) du repère orthonormé défini plus haut.

La partie centrale convexe 311 de la face supérieure 31 s'étend donc, selon les directions supérieure et inférieure précédemment définies, au-dessus des parties planes, 310a, 310b, de cette même face supérieure 31. Les premier et deuxième flancs latéraux 30a et 30b et la face supérieure 31 ont une forme allongée selon la direction longitudinale de l'axe X et présente au final une section la forme de « U » évoquée plus haut. La partie centrale est qualifié de convexe lorsqu'elle est observé depuis le dessus de l'adaptateur 3.

Selon un exemple de réalisation, au moins une fente longitudinale 41 est ménagée sur la face supérieure 31 de l'adaptateur 3.

Selon l'invention, au moins une cavité 41 d'extension longitudinale, c'est-à-dire perpendiculaire à l'axe transversal Y, est ménagée au travers de l'une au moins des première ou deuxième parties sensiblement planes 310a, 310b, de la face supérieure 31 de l'adaptateur 3. Selon le mode de réalisation privilégié illustré par les figures, quatre cavités 41 sont ainsi ménagées au travers de la face supérieure 31, symétriquement réparties deux-à-deux à la fois par rapport à un plan médian longitudinal perpendiculaire aux parties sensiblement planes 310a, 310b de ladite face supérieure 31 et par rapport à un plan médian transversal perpendiculaire aux premier et deuxième flancs latéraux 30a, 30b de l'adaptateur 3. Deux cavités 41 sont ainsi percées dans chacune des parties sensiblement planes 310a, 310b, de la face supérieure 31. Chaque cavité 41 est percée sur toute l'épaisseur des parties sensiblement planes 310a, 310b, de la face supérieure 31, et est donc traversante. Chaque cavité 41 est, de plus, délimitée par un bord fermé. Selon le mode de réalisation illustré par les figures, chaque cavité 41 présente une section sensiblement rectangulaire, prise dans un plan sensiblement parallèle à celui des première et deuxième parties sensiblement planes 310a, 310b de la face supérieure 31 de l'adaptateur 3.

Selon le premier mode de réalisation de l'invention illustré par les figures 2 et 3, la fente longitudinale 41 est ménagée dans ou au travers l'une au moins des première ou deuxième parties sensiblement planes 310a, 310b, de la face supérieure 31 de l'adaptateur 3. Selon la variante de réalisation plus particulièrement illustrée par les figures 2 et 3, quatre fentes 41 sont ménagées dans la face supérieure 31, symétriquement réparties à la fois par rapport à un plan médian longitudinal perpendiculaire aux parties sensiblement planes 310a, 310b de ladite face supérieure 31 et par rapport à un plan médian transversal perpendiculaire aux premier et deuxième flancs latéraux 30a, 30b de l'adaptateur 3. Deux fentes 41 sont ainsi percées dans chacune des parties sensiblement planes 310a, 310b, de la face supérieure 31. Chaque fente 41 est percée sur toute l'épaisseur des parties sensiblement planes 310a, 310b, de la face supérieure 31, et est donc traversante. Chaque fente 41 est, de plus, délimitée par un bord fermé. Selon le mode de réalisation illustré par les figures 2, 3, 6, 8 à 10, chaque fente 41 présente une section sensiblement rectangulaire, prise dans un plan sensiblement parallèle à celui des première et deuxième parties planes 310a, 310b de la face supérieure 31 de l'adaptateur 3.

Selon l'invention, un logement traversant 40 est par exemple ménagé dans l'adaptateur 3.

Selon le premier mode de réalisation de l'invention illustré par les figures 2 et 3, ce logement traversant 40 est agencé dans la face supérieure 31 de l'adaptateur 3, avantageusement dans la partie convexe 311 de cette face supérieure 31. Selon ce premier mode de réalisation de l'invention, le logement traversant 40, en projection sur un plan sensiblement parallèle aux première et deuxième parties planes 310a, 310b de la face supérieure 31, est délimité par un bord fermé et présente une section sensiblement rectangulaire, dont le grand côté est parallèle à l'axe longitudinal X de l'adaptateur 3 et dont le petit côté est parallèle à l'axe de pivotement Y. L'axe de pivotement Y est un axe transversal, avantageusement perpendiculaire, à l'axe longitudinal de l'adaptateur 3.

Comme le montre la figure 2, la présence du logement traversant 40 définit, dans la partie centrale convexe 311 de la face supérieure 31 de l'adaptateur 3, une première et une deuxième parties convexes transversales, respectivement référencées 311a, 311b, chacune rattachée à l'un des premier ou deuxième flancs latéraux, respectivement 30a, 30b. Le logement traversant 40 est ainsi entre la première partie convexe transversale 311a et la deuxième partie convexe transversale 311b. Selon le premier mode de réalisation illustré par les figures 2 et 3, la dimension longitudinale du logement traversant 40 est égale, ou sensiblement égale, à celle de la partie centrale convexe 311 de la face supérieure 3 de l'adaptateur 3, mesuré selon l'axe longitudinal X de l'adaptateur.

Selon un exemple de réalisation de l'invention, un évidement 40 est ménagé dans la partie convexe 311 de la face supérieure 31 de l'adaptateur 3. L'évidement 40 présente, en projection sur un plan sensiblement parallèle aux première et deuxième parties sensiblement planes 310a, 310b de la face supérieure 31, une section rectangulaire, ou sensiblement rectangulaire, dont le grand côté est parallèle à l'axe longitudinal X de l'adaptateur 3 et dont le petit côté est parallèle à l'axe transversal Y.

Selon un exemple de réalisation, l'adaptateur 3 comporte en outre un premier et un deuxième flancs d'extrémité 32a et 32b, qui s'étendent sensiblement perpendiculairement à la fois aux première et deuxième parties sensiblement planes 310a, 310b de la face supérieure 31 et aux premier et deuxième flancs latéraux 30a, 30b. Chacun des premier et deuxième flancs d'extrémité 32a et 32b est rattaché à la fois à la face supérieure de l'adaptateur 3 et à chacun des flancs latéraux 30a et 30b de celui-ci, de telle manière que la hauteur H, définie entre chaque partie plane 310a, 310b de la face supérieure 31, d'une part, et chaque arête inférieure des flancs latéraux, d'autre part, est constante. En d'autres termes, les premier et deuxième flancs latéraux 30a et 30b, d'une part, et les premier et deuxième flancs d'extrémité 32a et 32b, d'autre part, présentent tous, mesurée à partir de la partie plane 310a, 310b de la face supérieure à laquelle ils se rattachent, et selon la direction verticale, la même hauteur H. Les premier et deuxième flancs latéraux 30a et 30b, la face supérieure 31 et les premier et deuxième flancs d'extrémité 32a et 32b de l'adaptateur 3 définissent ainsi entre eux une cavité intérieure 33, destinée à accueillir une partie du connecteur 2, ainsi qu'il sera décrit plus loin.

Selon l'invention, en son côté opposé au côté par lequel il est rattaché aux parties sensiblement planes 310a 310b, de la face supérieure 31, l'un au moins des flancs latéraux 30a, 30b de l'adaptateur 3 présente un épaulement, qui s'étend à l'opposé du volume de la cavité intérieure 33, c'est-à-dire vers l'extérieur de l'adaptateur 3. Selon le mode de réalisation privilégié de l'invention illustré par les figures, chacun des premier et deuxième flancs latéraux est muni d'un tel épaulement, respectivement référencé 34a, 34b. Chacun de ces épaulements définit, sur le premier ou sur le deuxième flanc correspondant, un dégagement, respectivement 340a.

En son côté opposé à l'arête, respectivement 320a, 320b, par laquelle il est raccordé à la face supérieure de l'adaptateur 3, l'un au moins des flancs d'extrémité 32a, 32b, en particulier chaque flancs d'extrémité, présente en particulier une échancrure de forme générale sensiblement rectangulaire et qui s'étend en direction de la face supérieure 31, Le rôle de cette échancrure sera précisé plus loin. Chaque échancrure 35a, 35b définit ainsi, sur chacun des premier et deuxième flancs d'extrémité 32a, 32b, une forme en U renversé dont la base est constituée par l'arête 320a, 320b commune à la face supérieure 31 et au flanc d'extrémité correspondant, et dont les faces inférieures des sommets des branches forment, avec la face inférieure des épaulements 34a, 34b ménagés à la base des premier et deuxième flancs latéraux 30a, 30b, une surface d'appui 340 de l'adaptateur 3. Il est à noter ici que les épaulements 34a, 34b ménagés à la base des premier et deuxième flancs latéraux 30a, 30b, affleurent la surface extérieure de chaque flanc d'extrémité 32a, 32b, de l'adaptateur 3.

La figure 3 montre une vue de dessous de l'adaptateur 3 selon le premier mode de réalisation également illustré par la figure 2, c'est-à-dire qu'elle expose plus précisément la configuration intérieure de la cavité 33 délimitée par les premier et deuxième flancs latéraux, la face supérieure, et les premier et deuxième flancs d'extrémité de l'adaptateur 3. Comme le montre cette figure, une première et une deuxième nervures 36a, 36b, sont configurées parallèlement respectivement au premier et au deuxième flanc latéral 30a, 30b, au sein de la cavité 33. De faible épaisseur, chacune de ces nervures joue un rôle de renfort mécanique de l'adaptateur 3, et s'étend, sur toute la longueur de la cavité 33 délimitée dans l'adaptateur 3, entre les bords intérieurs de chacune des échancrures 35a, 35b ménagées respectivement dans le premier et dans le deuxième flanc d'extrémité 32a, 32b. Avantageusement, les dimensions de l'adaptateur 3 sont définies de telle manière que la dimension transversale du logement traversant 40 est sensiblement égale à la distance qui sépare, au sein de la cavité 33 de l'adaptateur 3, les nervures de renfort 36a, 36b entre elles.

Ainsi que le montrent les figures 2 et 3, chacun des premier et deuxième flancs latéraux 30a et 30b est percé, en sa partie médiane, selon l'axe longitudinal X, d'un palier de rotation, référencé 37a et 37b, qui reçoit l'arbre du bras d'entraînement. Le palier de rotation est d'axe transversal à l'axe longitudinal X et traverse les flancs latéraux de l'adaptateur 3. Selon un exemple de réalisation, ce palier de rotation prend la forme d'orifices transversaux traversants à section circulaire, coaxiaux, de même diamètre, et leurs centres sont alignés selon l'axe de pivotement Y défini plus haut.

Selon le premier mode de réalisation illustré par les Figures 2 et 3, chacun de ces orifices transversaux traversants, respectivement 37a sur le premier flanc latéral 30a, et 37b sur le deuxième flanc latéral 30b, est agencé dans la partie médiane, selon l'axe longitudinal X, du flanc latéral correspondant. Les centres de ces orifices transversaux traversants sont ainsi placés sensiblement au milieu de l'adaptateur 3 selon la direction longitudinale de celui-ci. Selon la direction verticale, perpendiculaire à la fois à l'axe longitudinal X et à l'axe de pivotement Y, les orifices transversaux traversants 37a, 37b, sont percés sensiblement dans la partie supérieure des flancs latéraux de l'adaptateur 3.

Plus précisément, selon ce premier mode de réalisation de l'invention, chacun des premier et deuxième flancs latéraux 30a, 30b, de l'adaptateur 3 comporte, en sa partie médiane selon l'axe longitudinal X, une partie centrale, respectivement 38a, 38b qui s'étend extérieurement en saillie à partir des surfaces extérieures sensiblement planes desdits flancs latéraux, et qui vient se rattacher, en sa partie supérieure, à la partie centrale convexe 311 de la face supérieure 31 de l'adaptateur 3.

Selon le premier mode de réalisation de l'invention illustré en particulier par les figures 2 et 3, et comme cela a été décrit plus haut, la partie centrale convexe 311 de la face supérieure 31, qui a la forme d'une portion d'une surface cylindrique, est centrée sur l'axe de pivotement Y. Il s'ensuit que la région convexe 311 de la partie centrale de la face supérieure 31 de l'adaptateur 3 et les orifices transversaux traversants 37a, 37b, ménagés sur les premier et deuxième flancs latéraux de ce même adaptateur, sont coaxiaux selon l'axe de pivotement Y. Selon ce mode de réalisation de l'invention, le profil saillant de chacune des parties centrales 38a, 38b, des premier et deuxième flancs latéraux 30a, 30b de l'adaptateur 3, est configuré de telle manière que la surface extérieure de chacune de ces parties affleure, en sa partie inférieure, la face extérieure de l'épaulement 34a, 34b, correspondant. Les orifices transversaux traversants 37a et 37b sont débouchants sur les parties centrales saillantes 38a, 38b, des premiers et deuxième flancs latéraux 30a, 30b de l'adaptateur 3.

Selon l'invention, le palier de rotation peut comprendre deux paliers de rotation 37a et 37b à section circulaire, coaxiaux et par exemple de même diamètre. Leurs centres, placés sensiblement au milieu de l'adaptateur 3 selon la direction longitudinale X de celui-ci, sont alignés selon l'axe transversal Y défini plus haut. Selon la direction verticale, perpendiculaire à la fois à l'axe longitudinal X et à l'axe transversal Y, les paliers de rotation 37a, 37b, sont percés sensiblement dans la partie supérieure des flancs latéraux de l'adaptateur 3.

Plus précisément, chacun des premier et deuxième flancs latéraux 30a, 30b, de l'adaptateur 3 comporte, en sa partie médiane selon l'axe longitudinal X, une partie centrale, respectivement 38a, 38b qui s'étend extérieurement en saillie à partir des surfaces extérieures sensiblement planes desdits flancs latéraux, et qui vient se rattacher, en sa partie supérieure, à la partie centrale convexe 311 de la face supérieure 31 de l'adaptateur 3. Selon un mode de réalisation de l'invention illustré par les figures, et comme cela a été décrit plus haut, la partie centrale convexe 311 de la face supérieure 31, qui a la forme d'une portion d'une surface cylindrique, est centrée sur l'axe transversal Y. Il s'ensuit que la région convexe de la partie centrale 311 de la face supérieure 31 de l'adaptateur 3 et les paliers de rotation 37a, 37b, ménagés sur les premier et deuxième flancs latéraux de ce même adaptateur, sont coaxiaux sur l'axe transversal Y.

Le profil saillant de chacune des parties centrales 38a, 38b, des premier et deuxième flancs latéraux 30a, 30b, de l'adaptateur 3 est configuré de telle manière que la surface extérieure de chacune de ces parties affleure, en sa partie inférieure, la face extérieure de l'épaulement 34a, 34b, correspondant. Les paliers de rotation 37a et 37b sont débouchants sur les parties centrales saillantes 38a, 38b, des premiers et deuxième flancs latéraux 30a, 30b, de l'adaptateur 3.

Selon un exemple de rotation du palier de rotation 37a, 37b, il est prévu une première et une deuxième portions cylindriques 39a, 39b percées de trous coaxiaux, s'étendant à l'intérieur de la cavité 33, entre la paroi intérieure du flanc latéral correspondant et la nervure de renfort 36a, 36b correspondante. Elles sont donc symétriquement disposées par rapport à un plan longitudinal médian de l'adaptateur 3 perpendiculaire aux parties sensiblement planes 310a, 310b de la face supérieure 31 de l'adaptateur 3. Ces portions cylindriques sont placées en regard l'une de l'autre, et s'étendent sensiblement l'une vers l'autre au sein de la cavité intérieure 33. Chacune de ces première et deuxième portions cylindriques, débouche, à l'une de ses extrémités, sur la paroi intérieure du flanc latéral correspondant et débouche, à son autre extrémité, au niveau de la nervure de renfort correspondante en traversant cette dernière. Les portions cylindriques forment, à la surface des nervures de renfort concernées, un toron cylindrique, respectivement référencé 390a, 390b, d'axe transversal également. Ces torons se loge dans le connecteur 2 et autorise ainsi une rotation de l'adaptateur par rapport au connecteur autour de l'axe Y. Ces torons cylindriques sont un exemple de réalisation de moyens de fixation de l'adaptateur 3 sur le connecteur 2.

Le volume de la cavité 33 se trouve donc ainsi partagé en un volume central 33' et quatre volumes périphériques 33" symétriquement disposés, d'une part, de part et d'autre du volume central 33' selon la direction transversale et, d'autre part, de part et d'autre de l'axe Y. Le volume central 33' est délimité par les parois intérieures des nervures de renfort 36a, 36b, les parois intérieures des flancs d'extrémité au niveau des échancrures 35a, 35b, et la partie transversale médiane de la paroi intérieure de la face supérieure 31 de l'adaptateur 3. . Chacun des volumes intérieurs périphériques 33" est défini par la paroi intérieure de l'un des premier ou deuxième flancs latéraux 30a, 30b, la nervure de renfort 36a, 36b, correspondante, la paroi intérieure de l'un des flancs d'extrémité, d'un côté de l'échancrure correspondante 35a, 35b, la paroi intérieure de la face supérieure 31 de l'adaptateur 3, et la paroi extérieure de l'une des première ou deuxième portions cylindriques 39a, 39b.

Chaque palier de rotation 37a, 37b, se prolonge ainsi à travers la portion cylindrique 39a, 39b correspondante, dont la surface intérieure est cylindrique, d'axe Y. Plus précisément, et comme le montrent les figures 2 et 3, la surface cylindrique intérieure de chacune des première et deuxième portions cylindriques 39a, 39b, a un diamètre inférieur au diamètre d'un lamage, respectivement 370a, 370b dont le fond se trouve, comme le montre la figure 3, transversalement entre la paroi intérieure du flanc correspondant et la nervure de renfort correspondante.

La figure 4 illustre un deuxième mode de réalisation d'un adaptateur 3 selon l'invention. Les principales différences entre ce deuxième mode de réalisation et le premier mode de réalisation sont les suivantes.

Selon ce deuxième mode de réalisation non revendiqué, illustré par la figure 4, la face supérieure 31' de l'adaptateur 3 est formée d'une première et d'une deuxième parties convexes 312 et 313, adjacentes. La forme de la première partie convexe 312 est celle d'une portion de l'enveloppe d'un cylindre centré sur l'axe de pivotement Y perpendiculaire à l'axe longitudinal X c'est-à-dire, parallèle à la direction de l'axe (Oy) du repère orthonormé défini plus haut. La forme de la deuxième partie convexe 313 est celle d'une portion de l'enveloppe d'un cylindre centré sur un axe transversal également parallèle à la direction de l'axe (Oy) du repère orthonormé défini plus haut. Les première et deuxième parties convexes 312 et 313 sont donc ici parallèles entre elles. Plus précisément, les première et deuxième parties convexes 312 et 313 sont sensiblement accolés l'une à l'autre selon la direction de l'une de leurs génératrices commune. Selon la variante de réalisation illustrée par la figure 4, le diamètre extérieur de la portion d'enveloppe cylindrique qui forme la deuxième partie convexe 313 de la face supérieure 31' de l'adaptateur 3 est sensiblement inférieur au diamètre extérieur de la portion d'enveloppe cylindrique qui forme la première partie convexe 312 de cette même face supérieure. En référence aux directions supérieure et inférieure précédemment définies, la génératrice la plus haute de la deuxième partie convexe 313 se trouve donc au-dessous de la génératrice la plus haute de la première partie convexe 312 de la face supérieure 31' de l'adaptateur 3. Selon d'autres variantes de réalisation non représentées, les diamètres extérieurs des deux portions d'enveloppes cylindriques qui constituent respectivement les première et deuxième parties convexes 312, 313, de la face supérieure 31' de l'adaptateur 3, peuvent être identiques.

Par ailleurs, selon le deuxième mode de réalisation, les premier et deuxième flancs d'extrémité, respectivement 32a et 32b, s'étendent avantageusement dans le prolongement vertical inférieur des enveloppes cylindriques qui forment respectivement la première et la deuxième parties convexes 312, 313 de la face supérieure 31' de l'adaptateur 3. Les arêtes 320a, 320b prennent ici la forme de congés qui joignent chaque flanc d'extrémité 32a, 32b à sa partie convexe 312, 313, de la face supérieure 31' concerné.

De plus, selon ce mode de réalisation, le logement traversant ici référencé 40' est agencé à partir de l'un des flancs d'extrémité 32a de l'adaptateur 3, et s'étend au sein des première et deuxième parties convexes 312 et 313. Plus précisément, le logement traversant 40' est ici agencé à partir du premier flanc d'extrémité 32a, formant ainsi une lumière ouverte. En d'autres termes, le logement traversant 40' est ici débouchant dans le premier flanc d'extrémité 32a. Selon ce deuxième mode de réalisation de l'invention, le logement traversant 40', en projection sur un plan sensiblement parallèle au plan (Oxy) du repère orthonormé défini plus haut, est ainsi délimité par trois bords contigües. Le logement traversant 40' présente une section rectangulaire, ou sensiblement rectangulaire, dont le grand côté est parallèle à l'axe longitudinal X de l'adaptateur 3, dont l'un des petits côtés est parallèle à l'axe de pivotement Y, et dont l'autre petit côté est ouvert et débouchant sur le premier flanc d'extrémité 32a.

Comme le montre la figure 4, la présence du logement traversant 40' définit ainsi, dans chacune des première et deuxième parties convexes 312 et 313 de la face supérieure 31' de l'adaptateur 3, deux zones convexes transversales, respectivement 312a et 312b pour la première partie convexe 312, et 313a, 313b pour la deuxième partie convexe 313, chacune rattachée à l'un des premier ou deuxième flancs latéraux, respectivement 30a, 30b, et symétriquement disposées, selon l'axe de pivotement Y, de part et d'autre du logement traversant 40'.

Selon ce deuxième mode de réalisation, le logement traversant 40' s'étend, selon l'axe longitudinal X, sur la totalité de la première partie convexe 312 et sur une partie de la deuxième partie convexe 313. La présence du logement traversant 40' définit ainsi, au sein de l'adaptateur 3, un premier et un deuxième flancs latéraux secondaires, respectivement 30a' et 30b, constitués chacun d'une paroi longitudinale verticale bordant le logement traversant 40'. Le logement traversant 40' est encore délimité par une paroi transversale 32c, disposée parallèlement au deuxième flanc d'extrémité 32b.

Selon le deuxième mode de réalisation illustré par la Figure 4, au moins une fente longitudinale peut être agencée sur au moins l'une des parties transversales 313a, 313b, de la deuxième partie convexe 313 de la face supérieure 31' de l'adaptateur 3. Selon une variante de ce mode de réalisation, deux fentes longitudinales 41' sont ménagées sur la deuxième partie convexe 313 de la face supérieure 31' de l'adaptateur 3, symétriquement réparties par rapport à un plan médian longitudinal parallèle aux premier et deuxième flancs latéraux 30a, 30b de l'adaptateur 3 ou, en d'autres termes, symétriquement réparties par rapport au logement traversant 40'. Chaque fente longitudinale 41' est percée sur toute l'épaisseur des première et deuxième parties convexes 313a, 313b, de la face supérieure 31', et est donc traversante. Comme pour le premier mode de réalisation, cette fente longitudinale reçoit la broche du bras d'entraînement et verrouille ainsi le dispositif de connexion selon l'invention.

Toujours selon ce deuxième mode de réalisation illustré par la figure 4, les premier et deuxième orifices transversaux traversants, respectivement 37a', 37b', sont ici ménagés dans les premier et deuxième flancs latéraux 30a, 30b, de telle manière que leurs centres sont alignés avec l'axe de pivotement Y de la portion d'enveloppe cylindrique qui constitue la première partie convexe 312 de la face supérieure 31' de l'adaptateur 3. Les premier et deuxième orifices latéraux sont coaxiaux entre eux et sont également optionnellement coaxiaux avec la première partie convexe 312. Ces premier et deuxième orifices transversaux traversants 37a', 37b'peuvent former le palier de rotation du dispositif de connexion selon l'invention, pour opérer un pivotement, selon l'axe de pivotement Y, du balai d'essuyage vis-à-vis de son bras d'entraînement.

Certains autres éléments caractéristiques de l'adaptateur 3 selon l'invention, illustrés par les figures 2 et 3 dans le cadre d'un premier mode de réalisation, et décrits en détail plus haut, se retrouvent également dans le cadre du deuxième mode de réalisation tel qu'illustré schématiquement par la figure 4. Il en est ainsi, en particulier, des épaulements ménagés à la base des flancs latéraux 30a, 30b.

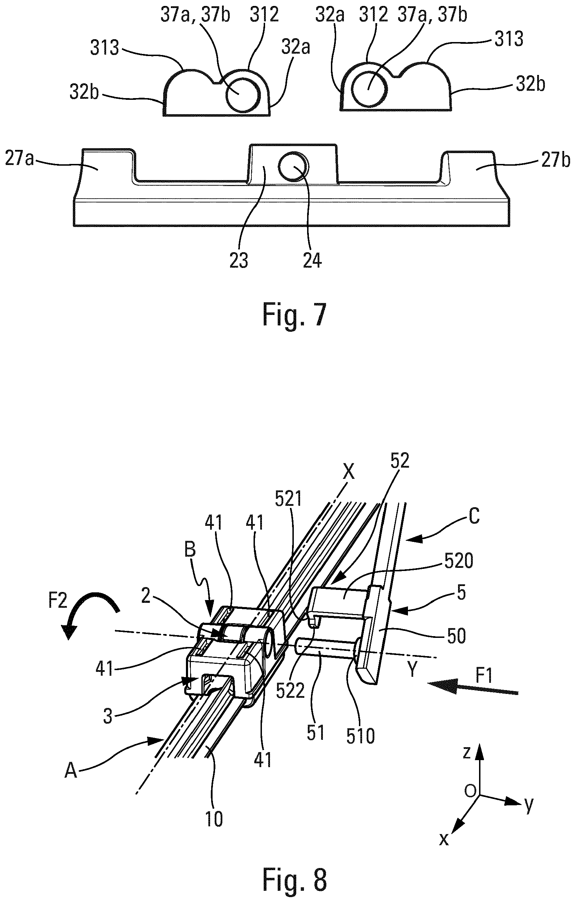

Les fonctions et rôles des différents éléments qui constituent l'adaptateur 3, dans son premier ou dans son deuxième mode de réalisation, apparaîtront de manière claire lors de la description, qui va suivre, de l'assemblage de celui-ci avec un connecteur 2 selon l'invention, tel qu'illustré par la figure 5 ou par la figure 7, ainsi que lors de la description de l'assemblage du dispositif de connexion B ainsi réalisé avec différents types de pièces terminales de bras d'entraînement d'essuie-glaces.

Le connecteur 2 du dispositif selon l'invention, schématiquement représenté en perspective par la figure 5, est conçu pour être rendu solidaire du balai d'essuyage A, par exemple par sertissage. Il assure une liaison mécanique dite complète ou isostatique avec le balai d'essuyage A, c'est-à-dire qu'une fois monté sur celui-ci, il ne présente aucun degré de liberté par rapport à ce dernier. Le connecteur 2 peut, le cas échéant, assurer une fonction de transport et/ou de distribution d'un liquide de lavage de la surface à essuyer.

Le connecteur 2 comporte une embase 20 qui s'étend longitudinalement selon l'axe X du balai d'essuyage et transversalement selon un axe perpendiculaire à cet axe longitudinal et à la direction verticale, c'est-à-dire parallèle à l'axe (Oy) du repère orthonormé défini plus haut. L'embase 20 comprend une zone de solidarisation du connecteur 2 sur le balai A. Selon le mode de réalisation illustré par la figure 5, cette zone de solidarisation prend la forme d'une première et d'une deuxième saignées longitudinales 21a ménagées en partie inférieure de l'embase 20, symétriquement disposées par rapport à un plan médian longitudinal vertical, et dont la forme de chacune définit, en bordure de l'embase, un crochet 22a apte à venir en prise sur le balai d'essuyage A.

L'embase 20 est surmontée d'un flanc sensiblement vertical 23, qui s'étend à partir de la partie médiane transversale de l'embase 20. Selon un mode de réalisation, le connecteur 2 est réalisé par injection d'un matériau polymère dans un moule approprié : le flanc vertical est donc avantageusement issu de matière avec l'embase 20. Le flanc vertical 23 présente une dimension transversale inférieure à celle de l'embase. Selon le mode de réalisation de l'invention illustré par la figure 4, le flanc vertical 23 comprend une pluralité de lumières 230 et de nervures 231 destinées à la fois à alléger son poids et à assurer son renforcement mécanique.

Le connecteur 2 comprend un trou transversal 24 par lequel un axe de pivotement du balai d'essuyage par rapport au bras d'entraînement passe. En sa partie supérieure, le flanc vertical est percé de ce trou transversal 24, par exemple traversant, de section circulaire, dont l'axe est confondu, une fois le connecteur 2 monté sur le balai d'essuyage A, avec l'axe de pivotement Y précédemment décrit. La face supérieure 25 du flanc vertical 23 comporte, longitudinalement, une partie médiane convexe 250 dont le profil est cylindrique, par exemple coaxial du trou transversal 24. La partie médiane longitudinale convexe 250 du connecteur 2 s'étend ainsi, selon les directions verticale et supérieure définies plus haut, au-dessus du reste de la face supérieure 25 du connecteur 2. Le trou transversal 24 reçoit la première portion cylindriques 39a, et la de deuxième portion cylindrique 39b de l'adaptateur 3.

Selon différents modes de réalisation, le connecteur 2 peut également comporter, s'étendant à partir de son embase 20, et ainsi que l'illustre schématiquement la figure 7, un premier et un deuxième capots verticaux 27a, 27b, disposés de part et d'autre du flanc vertical 23, et destinés à réaliser un capotage d'un déflecteur d'air du balai d'essuyage A. Selon la variante de réalisation illustrée par la figure 7, les premier et deuxième capots verticaux 27a, 27b sont symétriquement disposés, de part et d'autre du flanc vertical 23 par rapport à l'axe de pivotement Y.

La figure 6 montre un dispositif de connexion selon l'invention, constitué d'un connecteur 2 tel que décrit en rapport avec la figure 5 et d'un adaptateur 3 selon le premier mode de réalisation décrit plus haut et illustré par les figures 2 et 3, assemblés sur un balai d'essuyage A. L'adaptateur 3 est ici monté sur le connecteur 2 par translation verticale selon une direction sensiblement parallèle aux premier et deuxième flancs latéraux 30a, 30b, de l'adaptateur 3, et sensiblement perpendiculaire aux parties planes 310a, 310b, de la face supérieure 31 dudit adaptateur 3, selon la direction représentée par la flèche F sur la figure 6. Concrètement, l'utilisateur place l'adaptateur 3 au-dessus du connecteur 2, puis il exerce une pression, orientée selon la direction représentée par la flèche F sur la figure 6, sur la face supérieure 31 de l'adaptateur 3. Le flanc vertical 23 du connecteur 2 s'engage alors dans le volume central intérieur 33' de l'adaptateur 3, dont la dimension transversale H1 est avantageusement choisie égale ou très légèrement supérieure à la dimension transversale h1 du flanc vertical 23 (figure 5), de telle manière que l'insertion dudit flanc vertical au sein du volume central intérieur 33' puisse être faite sans effort excessif. Avantageusement, les dimensions de l'adaptateur 3 sont définies de telle manière que la dimension longitudinale intérieure du volume central 33' de celui-ci soit très légèrement supérieure à la dimension longitudinale extérieure du connecteur 2.

La liaison entre le connecteur 2 et l'adaptateur 3 se fait alors par encliquetage élastique des torons cylindriques 390a et 390b définis par les première et deuxième portions cylindriques percées des trous 39a, 39b dans le trou transversal 24 du connecteur 2, respectivement de part et d'autre du flanc vertical 23. Selon un mode de réalisation de l'invention, afin de favoriser cet encliquetage, un premier et un deuxième dégagements, respectivement 26a sont ménagés de chaque côté de la partie centrale supérieure du flanc vertical 23 du connecteur 2, au-dessus du trou transversal 24 et au droit de l'axe de celui-ci. Avantageusement, les dimensions et la géométrie de chacun des premier et deuxième dégagements 26a, sont définies conjointement avec l'épaisseur des torons cylindriques, respectivement 390a, 390b, pour permettre l'engagement de chacun desdits torons cylindriques dans le trou transversal 24 du connecteur 2 et pour, une fois cet engagement réalisé, permettre le blocage de l'adaptateur 3 sur le connecteur 2.

Selon le mode de réalisation de l'invention illustré par les figures, le diamètre intérieur du trou transversal 24 du connecteur 2 est égal au diamètre intérieur de chacune des portions cylindriques 39a, 39b, ménagées dans l'adaptateur 3. Un passage cylindrique transversal, centré sur l'axe Y, est ainsi défini au sein du dispositif de connexion selon l'invention, formé du connecteur 2 et de l'adaptateur 3 assemblés.

Comme le montre la figure 6, une fois le connecteur 2 assemblé avec l'adaptateur 3, l'évidement 40 ménagé dans la face supérieure 31 de l'adaptateur 3 constitue alors une lumière par laquelle la partie centrale convexe 250 du flanc vertical du connecteur 2 émerge, selon une direction perpendiculaire à celle de l'axe de pivotement Y, au travers de la face supérieure 31 de l'adaptateur 3. Il est à noter que, comme cela a été évoqué précédemment et comme le montre la figure 2, la présence de l'évidement 40 définit, dans la partie centrale convexe 311 de la face supérieure 31 de l'adaptateur 3, une première et une deuxième parties convexes transversales, respectivement 311a, 311b, chacune rattachée à l'un des premier ou deuxième flancs latéraux 30a, 30b, dont l'une est rattachée à la partie supérieure de la partie centrale 38a du premier flanc latéral 30a, et dont l'autre est rattachée à la partie supérieure de la partie centrale 38b du deuxième flanc latéral 30b.

Selon le mode de réalisation de l'invention illustré par les figures, les dimensions du connecteur 2 et de l'adaptateur 3 sont choisies de telle manière que, une fois ces deux éléments assemblés, les surfaces centrales convexes des faces supérieures du connecteur et de l'adaptateur, respectivement les surfaces convexes 250, 311a, et 311b, sont alignées et sensiblement affleurantes les unes vis-à-vis des autres. En d'autres termes, une fois le connecteur 2 et l'adaptateur 3 assemblés, ces surfaces forment sensiblement ensemble une surface convexe cylindrique unique, centrée sur l'axe Y. Une telle disposition permet de limiter les bruits aérauliques générés habituellement par des arêtes vives.

Le rôle des échancrures 35a et 35b ménagées dans les flancs d'extrémité de l'adaptateur 3 ressort également clairement de la figure 6 : chacune de ces échancrures vient emboîter la partie supérieure du balai d'essuyage A. Ces échancrures forment ainsi un dégagement dans lequel le déflecteur d'air du balai d'essuyage s'étend.

L'adaptateur 3 constitue ainsi une forme de capotage du connecteur 2 qu'il accueille en son sein. L'invention permet ainsi de réaliser un dispositif de connexion simple, compact, de montage et de démontage facile, et étanche, au sens où les zones éventuelles d'entrée de salissures ou de particules au sein du dispositif selon l'invention se trouvent réduites au minimum, voire supprimées, tant par la présence des échancrures ménagées dans les flancs d'extrémité de l'adaptateur 3, qui viennent entourer la partie supérieure du balai d'essuyage, que par la proche coopération de la partie supérieure du connecteur 2 dans l'évidement 40 ménagé dans la face supérieure de l'adaptateur 3, notamment de la partie convexe 250 du connecteur 2 avec la partie centrale 311 de l'adaptateur 3.

On notera enfin que l'adaptateur 3 comprend seulement deux cavités 41, ménagées toutes deux au travers de la même parties sensiblement planes 310a ou 310b délimitant l'adaptateur 3. L'autre partie sensiblement plane est pleine, c'est-à-dire dépourvue de cavité.

La figure 7 illustre schématiquement les deux possibilités d'assemblage d'un adaptateur 3 selon l'invention, dans son deuxième mode de réalisation tel qu'illustré par la figure 4.

Le mode d'assemblage consiste à enfiler l'adaptateur 3 sur le connecteur 2, en logeant le flanc vertical 23 du connecteur dans le logement traversant 40' de l'adaptateur 3. On aligne ensuite le palier de rotation 37a, 37b avec le trou transversal 24 du connecteur 2, puis on enfile un arbre du bras d'entraînement dans le palier de rotation et dans le trou transversal.

Selon ce deuxième mode de réalisation, l'adaptateur 3 est dissymétrique vu par rapport à un plan médian transversal vertical, c'est-à-dire parallèle au plan (Oyz) du repère orthonormé défini plus haut. Les orifices transversaux traversants 37a', 37b' de l'adaptateur 3 se trouvent ici longitudinalement décentrés sur l'adaptateur 3, en étant placés au droit de la première partie convexe 312 dudit adaptateur 3. Il s'ensuit que deux sens de montage de l'adaptateur 3 sur le connecteur 2 peuvent être réalisés, comme le montre la figure 7. Selon ces différents sens de montage, la deuxième partie convexe 313 de l'adaptateur 3 se trouve d'un côté ou de l'autre du flanc vertical 23 du connecteur 2, selon l'axe longitudinal X du balai d'essuyage A sur lequel ce connecteur 2 est solidarisé.

Il est à noter que, dans le cas où l'adaptateur 3 est réalisé selon le deuxième mode de réalisation, plus particulièrement illustré par la figure 4, la présence d'un espace libre du côté longitudinal du flanc vertical 23 du connecteur 2 opposé au côté qui accueille la deuxième partie convexe 313 de la face supérieure 31' dudit adaptateur 3 permet la mise en place complémentaire d'un capuchon destiné, par exemple, à assurer une finition esthétique du dispositif de connexion, conforme à l'esthétique générale du véhicule. Dans ce cas, l'absence de plan de symétrie transversal vertical dans l'adaptateur 3 permet l'utilisation de ce type de capuchon quel que soit le sens de montage du dispositif selon l'invention et, notamment quel que soit côté de circulation du véhicule équipé d'un tel dispositif.

Les figures 8 à 8 présentent différents exemples d'assemblage d'un dispositif de connexion selon l'invention tel qu'il vient d'être décrit avec différents types de bras d'entraînement d'essuie-glace connu sous la dénomination "side-lock".

Les figures 8 à 10 présentent différents exemples d'assemblage d'un dispositif de connexion selon l'invention tel qu'il vient d'être décrit avec différents types de bras d'entraînement d'essuie-glace connu sous la dénomination "side-lock". L'adaptateur représenté sur l'ensemble de ces figures est celui décrit en rapport avec le premier mode de réalisation illustré par les figures 2 et 3, mais il va de soi que l'assemblage, avec ses caractéristiques et avantages, est similaire pour un dispositif de connexion qui comporterait un adaptateur et un connecteur tels que décrits par le deuxième mode de réalisation illustré par la figure 7.

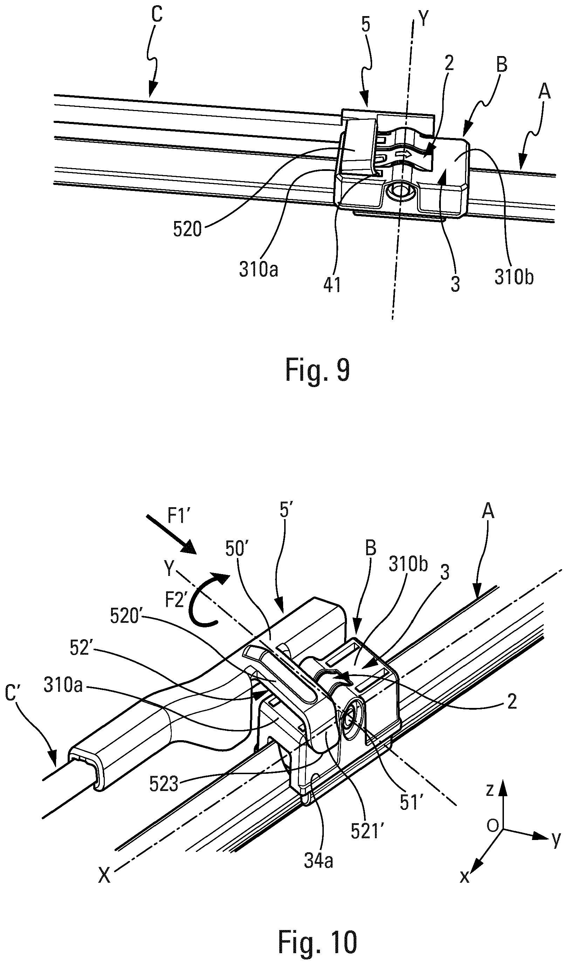

Les figures 8 et 9 illustrent plus particulièrement l'assemblage d'un dispositif de connexion B selon l'invention, tel qu'il vient d'être décrit, avec la pièce terminale 5 d'un bras d'entraînement C, dans une connexion du type connu sous la dénomination "side-lock étroit". La figure 6 illustre l'assemblage des éléments d'une telle connexion, et la figure 7 montre le balai d'essuyage A, le dispositif de connexion selon l'invention B, et le bras d'entraînement C assemblés selon une telle connexion.

En référence à la figure 68 la pièce terminale 5 du bras d'entraînement C dans une connexion de type "side-lock étroit" est schématiquement constituée d'une embase 50 qui s'étend sensiblement longitudinalement selon la direction générale du bras d'entraînement C, et qui est, en général, emboîtée à l'extrémité libre d'une tige constitutive du bras d'entraînement. A partir l'embase 50 s'étendent, selon une direction perpendiculaire à la direction longitudinale du bras d'entraînement C, un arbre 51 sensiblement cylindrique, et une broche de fixation 52. Plus précisément, la direction matérialisée par l'axe de l'arbre 51 est parallèle à celle de l'axe Y décrit précédemment.

La broche de fixation 52 se présente sous la forme d'une plaque dont la forme générale est sensiblement celle d'un L et dont la branche principale 520 s'étend, à partir de l'embase 50, sensiblement parallèlement à la direction de l'axe de l'arbre cylindrique 51, et dont une branche terminale 521, de plus faible longueur, s'étend sensiblement perpendiculairement à la branche principale 520, de telle manière que, lorsque le bras d'entraînement C, muni de sa pièce terminale 5, est assemblé avec un dispositif de connexion B selon l'invention installé sur un balai d'essuyage A, cette branche terminale s'étende vers la lame racleuse 10 du balai d'essuyage A, c'est-à-dire vers le pare-brise.

Lors de l'assemblage du balai d'essuyage A sur un tel bras d'entraînement, via un dispositif de connexion B selon l'invention, l'arbre 51 est engagé dans un passage cylindrique transversal, centré sur l'axe Y, défini par le trou transversal 24 du connecteur 2, par les paliers de rotation traversants, respectivement 37a, 37b, et par les première et deuxième portions cylindriques 39a, 39b percées des trous, de l'adaptateur 3.

Selon le mode de réalisation de l'invention illustré par la figure 6, l'arbre 51 comporte, en sa zone de raccordement à l'embase 50, une base 510 de plus grand diamètre. Avantageusement, le diamètre des lamages 370a, 370b, respectivement configurés autour de chacun des paliers de rotation traversants 37a, 37b percés dans chacun des premier et deuxième flancs latéraux 30a, 30b, de l'adaptateur 3, est choisi pour pouvoir accueillir la base 510 de l'arbre 51, de telle manière que cette dernière vienne en appui du fond du lamage situé du côté du dispositif de connexion B par lequel l'arbre 51 est engagé. L'arbre 51 se trouve ainsi engagé et bloqué circonférentiellement dans le dispositif de connexion B selon l'invention.

L'axe Y, matérialisé par l'arbre 51 engagé dans le passage cylindrique transversal du dispositif de connexion selon l'invention B, représente alors l'axe de pivotement du balai d'essuyage A par rapport à son bras d'entraînement C.

Avantageusement, les dimensions de l'adaptateur 3 sont définies de telle manière que, lorsque l'arbre 51 est engagé dans le passage cylindrique transversal du dispositif de connexion B selon l'invention, la branche terminale 521 de la broche 52 se trouve en regard de l'une des cavités 41 ménagées dans la face supérieure 31 de l'adaptateur 3. La cinématique de montage du balai d'essuyage A sur le bras d'entraînement C est alors la suivante :
- engagement de l'arbre 51 dans le passage cylindrique transversal du dispositif de connexion, selon la direction matérialisée par la flèche F1, parallèle à l'axe Y, jusqu'à ce que la base 510 de l'arbre 51 soit en butée dans l'un ou l'autre des lamages 370a, 370b, de l'adaptateur 3,
- puis rotation du balai d'essuyage A autour de l'axe de pivotement Y, selon la direction matérialisée par la flèche F2 sur la figure 6, pour engager la partie terminale 521 de la broche 52 au sein de la cavité 41 avec laquelle elle est en regard.

Une fois l'assemblage réalisé, et comme le montre la figure 9, la branche principale 520 de la broche 52 se trouve sensiblement en appui de l'une ou l'autre des parties sensiblement planes 310a, 310b de l'adaptateur 3, et tout mouvement de la pièce terminale 5 selon la direction de l'axe de pivotement Y est bloqué, par l'engagement de la branche terminale 521 de la broche 52 dans une cavité 41 de l'adaptateur 3. Avantageusement, pour renforcer la liaison entre le bras d'entraînement et le dispositif de connexion selon l'invention, un ergot 522 peut être ménagé à l'extrémité libre de la branche terminale 521 de la broche 52. Lors de l'insertion de la branche terminale 521 de la broche 52 dans l'une des cavités 41 de l'adaptateur 3, l'ergot 522 peut alors s'engager sous la paroi inférieure de la face supérieure 31 de l'adaptateur 3, constituant ainsi un moyen de blocage de la rotation du balai d'essuyage par rapport au bras d'entraînement.

Pour désassembler bras d'entraînement et balai d'essuyage équipé du dispositif de connexion selon l'invention, il suffit de réaliser, dans l'ordre inverse, les étapes de la cinématique d'assemblage décrites plus haut.

L'invention permet ainsi, au moyen d'un dispositif de connexion compact et d'utilisation simple, de réaliser l'assemblage d'un bras d'entraînement équipé d'une pièce terminale de type "side-lock étroit" sur un balai d'essuyage. Ainsi, dans l'exemple illustré par les figures 8 et 9, la branche terminale de la broche du bras d'entraînement est engagée dans la cavité 41 la plus éloignée du flanc latéral de l'adaptateur 3 contre lequel le bras d'entraînement vient se positionner. Une telle configuration n'est, bien sûr, pas exclusive, et il est tout à fait envisageable, pour d'autres variantes géométriques de la pièce terminale du bras d'entraînement, que la branche terminale de la broche du bras d'entraînement soit, par exemple, engagée dans la cavité 41 la plus proche du flanc latéral de l'adaptateur 3 contre lequel le bras d'entraînement vient se positionner.

La figure 10 illustre plus particulièrement l'assemblage d'un dispositif de connexion B avec une pièce terminale 5' d'un bras d'entraînement C' du type connu sous la dénomination "side-lock standard". Selon l'invention, le dispositif de connexion est identique pour une pièce terminale 5 d'un bras d'entraînement C du type connu sous la dénomination "side-lock standard", et pour une pièce terminale 5 d'un bras d'entraînement C du type connu sous la dénomination "side-lock étroit.

Comme dans le cas d'une connexion de type "side-lock étroit", la pièce terminale 5' d'un bras d'entraînement C' dans une connexion de type "side-lock standard" est constituée d'une embase 50' qui s'étend sensiblement longitudinalement selon la direction générale du bras d'entraînement C', et qui est, en général, emboîtée à l'extrémité libre d'une tige du bras d'entraînement. A partir l'embase 50' s'étendent, selon une direction perpendiculaire à la direction longitudinale du bras d'entraînement C', un arbre 51' sensiblement cylindrique, et une broche de fixation 52'. L'arbre 51' est similaire à l'arbre 51 décrit plus haut dans le cas d'une connexion de type "side-lock étroit" et la description de cette arbre et de sa coopération avec les lamages 370a et 370b est incorporé ici.

Les différences avec la connexion de type "side-lock étroit" résident dans la géométrie et les dimensions de la broche 52'. Comme pour une connexion du type "side-lock étroit", la broche 52' a la forme générale d'un L. La branche principale 520', et éventuellement la branche terminale 521' de la broche 52', sont toutefois ici plus longues que dans le cas d'une connexion de type "side-lock étroit". Par ailleurs, l'extrémité de la branche terminale 521' présente ici une légère incurvation 523 selon la direction transversale. Selon le mode de réalisation illustré par la figure 8, l'incurvation 523 est orientée vers l'extérieur, c'est-à-dire à l'opposé du bras d'entraînement C'.

Lors de l'assemblage d'un tel bras d'entraînement avec un dispositif de connexion B selon l'invention installé sur un balai d'essuyage A, l'engagement de l'arbre 51' dans le passage cylindrique transversal médian du dispositif de connexion B sont réalisés de la même manière que pour une connexion du type "side-lock étroit" décrite plus haut. De même que pour une connexion du type "side-lock étroit", l'axe Y, matérialisé par l'arbre 51' engagé dans le passage cylindrique transversal médian du dispositif de connexion B, représente alors l'axe de pivotement du balai d'essuyage A par rapport à son bras d'entraînement C'.

Avantageusement, les dimensions de l'adaptateur 3 sont définies de telle manière que, comme le montre la figure 8, lorsque l'arbre 51' est engagé dans le passage cylindrique transversal médian du dispositif de connexion, la branche principale 520' de la broche 52' s'étend sur la totalité de la dimension transversale du dispositif de connexion B. La branche terminale 521' de la broche 52' se trouve alors au regard de la paroi extérieure du flanc latéral 30a ou 30b de l'adaptateur 3 le plus éloigné du flanc contre lequel le bras d'entraînement C' vient se placer. De cette manière, la broche 52' peut être engagée au-dessus de l'adaptateur 3, avec la branche terminale 521' reçue dans l'un des dégagements 340a, 340b agencés sur le flanc latéral de l'adaptateur 3. Selon l'invention, les dimensions de l'adaptateur 3 sont définies de telle manière que, une fois la broche 52' emboîtée sur la partie supérieure de l'adaptateur, l'extrémité 523, légèrement incurvée de la branche terminale 521' vienne en appui sur l'un des épaulements 34a, 34b ménagés à la base des premier et/ou deuxième flancs latéraux de l'adaptateur 3.

La cinématique de montage du bras d'entraînement C' sur l'ensemble formé du balai d'essuyage A et du dispositif de connexion B selon l'invention est alors la suivante :
- engagement de l'arbre 51' dans le passage cylindrique transversal médian du dispositif de connexion, selon la direction matérialisée par la flèche F1' sur la figure 10, parallèle à l'axe Y, jusqu'à ce que la base de l'arbre 51' soit en butée dans l'un ou l'autre des lamages 370a, 370b, de l'adaptateur 3, l'arbre 51' étant ainsi bloqué radialement dans le dispositif de connexion B selon l'invention,
- puis, pivotement du balai d'essuyage A par rapport au bras d'entraînement C' autour de l'axe Y, selon la direction matérialisée par la flèche F2' sur la Figure 10, pour réaliser l'emboîtement de la broche 52' autour de la partie supérieure de l'adaptateur 3, jusqu'à ce que la branche terminale 521' de la broche 52' soit reçue dans l'un des dégagements 340a, 340b agencés sur le premier et/ou le deuxième flanc latéral 30a, 30b opposé au flanc latéral contre lequel le bras d'entraînement C' vient se placer.

Pour désassembler bras d'entraînement et balai d'essuyage équipé du dispositif de connexion selon l'invention, il suffit de réaliser, dans l'ordre inverse, les étapes de la cinématique d'assemblage décrites plus haut.

L'invention permet donc de réaliser, par des cinématiques simples, au moyen d'un seul dispositif de connexion, l'assemblage d'une grande variété de bras d'entraînement d'essuie-glace sur un balai d'essuyage. Le dispositif de connexion proposé par l'invention est, en outre, d'un montage simple et, par la configuration du connecteur et de l'adaptateur qui le composent, d'une production aisée en grande série. Le dispositif de connexion selon l'invention offre, de plus, une bonne étanchéité, au sens où les points potentiels d'entrée d'eau ou de salissures en son sein sont réduits au minimum, voire supprimés. L'invention permet donc en particulier de réaliser, par des cinématiques simples, au moyen d'un dispositif de connexion d'un type unique, l'assemblage de bras de type « side-lock standard » et de type « side-lock étroit ».

Le dispositif de connexion proposé par l'invention est, en outre, d'un montage simple et, par la configuration du connecteur et de l'adaptateur qui le composent, d'une production aisée en grande série.

L'invention ne saurait toutefois se réduire aux moyens et configurations décrits et illustrés, mais elle s'applique également à tous moyens ou configurations équivalents et à toute combinaison de tels moyens équivalents. De même, il va de soi que toute variante exposée dans le cadre du premier mode de réalisation de l'adaptateur d'un tel dispositif de connexion s'applique également au cas où un tel adaptateur est du type décrit par le deuxième mode de réalisation dans le présent document.

## Revendications

1. Dispositif de connexion (B) pour la liaison mécanique d'un balai d'essuyage (A) à un bras d'entraînement (C, C') d'essuie-glaces de véhicule automobile, qui comprend un connecteur (2) destiné à être rendu solidaire d'un balai d'essuyage (A) et un adaptateur (3) destiné à relier le connecteur (2) à une pièce terminale (5, 5') du bras d'entraînement (C, C'), l'adaptateur (3) étant délimité par au moins deux flancs latéraux (30a, 30b) et une face supérieure (31), chacun des flancs latéraux (30a, 30b) étant rattaché à la face supérieure (31), dans lequel le connecteur (2) comprend au moins un trou (24) de section circulaire par lequel passe un axe de pivotement (Y) du balai d'essuyage (A) par rapport au bras d'entraînement (C, C'), le trou (24) du connecteur étant délimité par au moins un flanc (23), l'adaptateur (3) comprenant au moins un logement traversant (40) ménagé dans la face supérieure (31) et dans lequel s'étend au moins en partie le flanc (23) du connecteur (2), et au moins l'un des flancs latéraux (30a, 30b) de l'adaptateur (3) présente un épaulement (34a, 34b) ménagé sur un bord opposé au bord par lequel le flanc latéral est rattaché à la face supérieure (31) de l'adaptateur (3), **caractérisé en ce que** quatre fentes traversantes (41) sont ménagées dans la face supérieure (31) de l'adaptateur (3), symétriquement réparties à la fois par rapport à un plan médian longitudinal perpendiculaire à des parties sensiblement planes (310a,310b) de la face supérieure (31) de l'adaptateur (3) et par rapport à un plan médian transversal perpendiculaire aux premier et deuxième flancs latéraux (30a, 30b) de l'adaptateur (3), chaque fente traversante (41) étant configurée pour recevoir une broche (52) du bras d'entrainement (C).

2. Dispositif selon la revendication 1, le au moins un trou (24) étant de section circulaire.

3. Dispositif selon la revendication 1 ou 2, dans lequel le logement traversant (40) est ménagé dans la face supérieure (31) délimitant l'adaptateur (3).

4. Dispositif selon la revendication précédente, dans lequel le logement traversant (40) est délimité par un bord fermé.

5. Dispositif selon l'une quelconques des revendications précédentes, dans lequel le logement traversant (40) est centré sur l'adaptateur (3), selon un axe longitudinal (X) dudit adaptateur (3), et borde deux parties sensiblement planes (310a, 310b) de la face supérieure (31) et deux parties sensiblement convexes (311a, 311b) délimitant la face supérieure (31) de l'adaptateur (3).

6. Dispositif selon la revendication précédente, dans lequel le logement traversant (40) présente, en projection sur un plan parallèle aux première et deuxième parties sensiblement planes (310a, 310b) de la face supérieure (31), une section sensiblement rectangulaire dont le grand côté est parallèle à l'axe longitudinal (X) de l'adaptateur (3) et dont le petit côté est sensiblement parallèle à l'axe de pivotement (Y).

7. Dispositif selon l'une quelconque des revendications précédentes, dans lequel chacun des premier et deuxième flancs latéraux (30a, 30b) de l'adaptateur (3) présente un épaulement (34a, 34b).

8. Dispositif selon l'une quelconque des revendications précédentes, dans lequel l'adaptateur (3) est délimité par au moins un premier flanc latéral (30a) et par un deuxième flanc latéral (30b), un palier de rotation étant ménagé dans lesdits premier et deuxième flancs latéraux (30a, 30b) pour recevoir un arbre (51, 51') du bras d'entraînement (C, C').

9. Dispositif selon la revendication précédente, dans lequel le palier de rotation est formé par au moins un orifice traversant (37a, 37b) les premier et deuxième flancs latéraux (30a, 30b), de section circulaire, et en ce que les orifices traversants (37a, 37b) sont coaxiaux et de même diamètre, leurs centres étant alignés selon l'axe de pivotement (Y).

10. Dispositif selon la revendication précédente, dans lequel un premier et un deuxième torons cylindriques (39a, 39b) s'étendent, coaxialement aux orifices traversants (37a, 37b) au sein d'une cavité (33) délimitée par les premier et deuxième flancs latéraux (30a, 30b), des premier et deuxième flancs d'extrémité (32a, 32b), et la face supérieure (31) de l'adaptateur (3).

11. Dispositif selon la revendication précédente dans lequel les premier et deuxième torons cylindriques (39a, 39b) sont de même diamètre intérieur que les premier et deuxième orifices traversants (37a, 37b) et s'étendant sensiblement l'un vers l'autre au sein du volume de ladite cavité (33).

12. Dispositif selon l'une quelconque des revendications 9 à 11, dans lequel le profil de la face supérieure (31) de l'adaptateur (3), au droit de chacun des orifices traversants (37a, 37b) est identique au profil d'une paroi supérieure (25) délimitant le flanc (23) du connecteur (2) au droit du trou (24).

13. Dispositif de connexion (B) pour la liaison mécanique d'un balai d'essuyage (A) à un bras d'entraînement (C) d'essuie-glaces side-lock étroit de véhicule et à un bras d'entraînement (C') d'essuie-glace side-lock standard de véhicule, les bras d'entrainement (C, C') comprenant, chacun, un arbre (51, 51') et une broche (52, 52'), chaque broche (52, 52') présentant une forme générale en L et comprenant au moins une branche principale (520, 520') et une branche terminale (521, 521'), au moins la branche principale (520') de la broche (52') du bras d'entrainement (C') side-lock standard étant plus longue que la branche principale (520) de la broche (52) du bras d'entrainement (C) side-lock étroit, le dispositif de connexion (B) comprenant :
- un connecteur (2) destiné à être rendu solidaire du balai d'essuyage (A) et comprenant au moins un trou transversal (24) apte à recevoir l'un des arbres (51, 51'),
- un adaptateur (3) destiné à relier le connecteur (2) à l'un des bras d'entraînement (C, C'), l'adaptateur (3) étant délimité par des faces latérales (30a,30b) et par une face supérieure (310) et comprenant au moins un palier de rotation (37a, 37b) apte à recevoir l'un des arbres (51, 51') et un moyen de fixation (390a, 390b) de l'adaptateur (3) sur le connecteur (2), l'adaptateur (3) comprenant au moins quatre cavités (41) sensiblement perpendiculaires à un axe transversal (Y) passant par le palier de rotation (37a, 37b), ces cavités (41) étant symétriquement réparties deux-à-deux à la fois par rapport à un plan médian longitudinal perpendiculaire à deux parties sensiblement planes (310a, 310b) de la face supérieure (31) de l'adaptateur (3) et par rapport à un plan médian transversal perpendiculaire aux faces latérales (30a, 30b) de l'adaptateur (3), au moins une de ces cavités (41) étant destinée à recevoir la broche (52) du bras d'entrainement (C) side-lock étroit, l'adaptateur (3) comprenant au moins un dégagement (340a, 340b) ménagé dans l'une des faces latérales (30a, 30b), le dégagement (340a, 340b) étant agencé pour recevoir la broche (52') du bras d'entrainement (C') side-lock standard, et dans lequel le palier de rotation (37a, 37b), le trou transversal (24) et le moyen de fixation (390a, 390b) sont coaxiaux.

14. Dispositif selon la revendication précédente, dans lequel chaque cavité (41) est délimitée par un bord fermé.

15. Dispositif selon la revendication précédente, dans lequel le bord fermé de chaque cavité (41) est ménagé dans l'une des parties sensiblement planes (310a, 310b) de la face supérieure (31) de l'adaptateur (3).

16. Dispositif selon l'une quelconque des revendications 13 à 15, dans lequel l'adaptateur (3) comprend au moins un dégagement (340a, 340b) sur chacune de ses faces latérales (30a, 30b).

17. Dispositif selon l'une quelconque des revendications 13 à 16, dans lequel le palier de rotation (37a, 37b) comprend un premier palier (37a) et un deuxième palier (37b) coaxiaux, le premier palier (37a) étant séparé du deuxième palier (37b) par un évidement (40) qui débouche sur la face supérieure (31) de l'adaptateur (3).

18. Dispositif selon la revendication précédente, dans lequel au moins une portion du connecteur (2) s'étend dans l'évidement (40) de l'adaptateur (3), entre le premier palier (37a,) et le deuxième palier (37b) de rotation.

19. Dispositif selon l'une quelconque des revendications 13 à 18, dans lequel le moyen de fixation de l'adaptateur (3) sur le connecteur (2) prend la forme de torons cylindriques (390a, 390b) issus de l'adaptateur et reçus dans au moins un trou (39a, 39b) complémentaire ménagé dans le connecteur (2).

20. Dispositif selon l'une quelconque des revendications 13 à 19, dans lequel la face supérieure (311) de l'adaptateur, au droit du palier de rotation (37a, 37b), suit un profil similaire à celui d'une paroi supérieure (250) du connecteur (2) au droit de la portion centrale de ce dernier dans laquelle est ménagé le trou transversal (24).

21. Balai d'essuyage (A) pour véhicule notamment automobile, **caractérisé en ce qu'**il comprend un dispositif de connexion (B) selon l'une quelconque des revendications précédentes.

22. Système d'essuyage pour véhicule, comprenant au moins un balai d'essuyage (A) selon la revendication 21 attaché à un bras d'entraînement (C) par un dispositif de connexion (B), un arbre (51) porté par une pièce terminale (5) du bras d'entraînement (C) étant logé dans le palier de rotation (37a, 37b) de l'adaptateur (3), une broche (52) étant reçue dans la cavité (41).

23. Système d'essuyage pour véhicule automobile, comprenant un balai d'essuyage (A) selon la revendication 21 attaché à un bras d'entraînement (C') par un dispositif de connexion (B), un arbre (51) porté par une pièce terminale (5) du bras d'entraînement (C') étant logé dans le palier de rotation (37a, 37b) de l'adaptateur (3), une broche (52') étant reçue dans un dégagement (340a, 340b) ménagé dans un flanc latéral (30a, 30b) de l'adaptateur (3).

## Patentansprüche

1. Verbindungsvorrichtung (B) für die mechanische Verbindung eines Scheibenwischerblatts (A) mit einem Antriebsarm (C, C') eines Kraftfahrzeugscheibenwischers, die einen Verbinder (2) umfasst, der zur festen Verbindung mit einem Scheibenwischerblatt (A) bestimmt ist, und einen Adapter (3), der bestimmt ist, den Verbinder (2) mit einem terminalen Teil (5, 5') des Antriebsarms (C, C') zu verbinden, wobei der Adapter (3) von mindestens zwei seitlichen Flanken (30a, 30b) und einer oberen Fläche (31) begrenzt ist, wobei jede der seitlichen Flanken (30a, 30b) an der oberen Fläche (31) angeschlossen ist, wobei der Verbinder (2) mindestens ein Loch (24) mit kreisförmigem Querschnitt umfasst, durch welches eine Schwenkachse (Y) des Scheibenwischerblatts (A) in Bezug auf den Antriebsarm (C, C') verläuft, wobei das Loch (24) des Verbinders von mindestens einer Flanke (23) begrenzt ist, wobei der Adapter (3) mindestens eine durchgehende Aufnahme (40) umfasst, die in der oberen Fläche (31) eingerichtet ist und in welcher sich die Flanke (23) des Verbinders (2) mindestens teilweise erstreckt, und mindestens eine der seitlichen Flanken (30a, 30b) des Adapters (3) einen Absatz (34a, 34b) aufweist, der auf einem Rand eingerichtet ist, der dem Rand gegenüberliegt, durch den die seitliche Flanke an die obere Fläche (31) des Adapters (3) angegliedert ist, **dadurch gekennzeichnet, dass** vier durchgehende Schlitze (41) in der oberen Fläche (31) des Adapters (3) eingerichtet sind, die sowohl in Bezug auf eine mittlere Längsebene, die senkrecht zu im Wesentlichen ebenen Teilen (310a, 310b) der oberen Fläche (31) des Adapters (3) ist, als auch in Bezug auf eine mittlere transversale Ebene, die senkrecht zu der ersten und zweiten seitlichen Flanke (30a, 30b) des Adapters (3) ist, symmetrisch verteilt sind, wobei jeder durchgehende Schlitz (41) dazu ausgestaltet ist, eine Spindel (52) des Antriebsarms (C) aufzunehmen.

2. Vorrichtung nach Anspruch 1, wobei das mindestens eine Loch (24) kreisförmigen Querschnitts ist.

3. Vorrichtung nach Anspruch 1 oder 2, wobei die durchgehende Aufnahme (40) in der oberen Fläche (31) eingerichtet ist, die den Adapter (3) begrenzt.

4. Vorrichtung nach dem vorhergehenden Anspruch, wobei die durchgehende Aufnahme (40) von einem geschlossenen Rand begrenzt ist.

5. Vorrichtung nach einem der vorhergehenden Ansprüche, wobei die durchgehende Aufnahme (40) auf dem Adapter (3) gemäß einer Längsachse (X) des Adapters (3) zentriert ist und zwei im Wesentlichen ebene Teile (310a, 310b) der oberen Fläche (31) und zwei im Wesentlichen konvexe Teile (311a, 311b) säumt, welche die obere Fläche (31) des Adapters (3) begrenzen.

6. Vorrichtung nach dem vorhergehenden Anspruch, wobei die durchgehende Aufnahme (40) in Projektion auf eine zu dem ersten und zweiten im Wesentlichen ebenen Teil (310a, 310b) der oberen Fläche (31) parallele Ebene einen im Wesentlichen rechteckigen Querschnitt aufweist, dessen große Seite parallel zur Längsachse (X) des Adapters (3) ist und dessen kleine Seite im Wesentlichen parallel zur Schwenkachse (Y) ist.

7. Vorrichtung nach einem der vorhergehenden Ansprüche, wobei jede der ersten und zweiten seitlichen Flanke (30a, 30b) des Adapters (3) einen Absatz (34a, 34b) aufweist.

8. Vorrichtung nach einem der vorhergehenden Ansprüche, wobei der Adapter (3) von mindestens einer ersten seitlichen Flanke (30a) und von einer zweiten seitlichen Flanke (30b) begrenzt ist, wobei ein Drehlager in der ersten und zweiten seitlichen Flanke (30a, 30b) eingerichtet ist, um eine Welle (51, 51') des Antriebsarms (C, C') aufzunehmen.

9. Vorrichtung nach dem vorhergehendem Anspruch, wobei das Drehlager von mindestens einer Öffnung (37a, 37b) kreisförmigen Querschnitts gebildet ist, welche durch die erste und zweite seitliche Flanke (30a, 30b) hindurchgeht, und dass die Durchgangsöffnungen (37a, 37b) koaxial und desselben Durchmessers sind, wobei ihre Mitten gemäß der Schwenkachse (Y) ausgerichtet sind.

10. Vorrichtung nach dem vorhergehenden Anspruch, wobei sich ein erster und ein zweiter zylindrischer Strang (39a, 39b) koaxial zu den Durchgangsöffnungen (37a, 37b) innerhalb eines Hohlraums (33) erstrecken, der von der ersten und zweiten seitlichen Flanke (30a, 30b), der ersten und zweiten Endflanke (32a, 32b) und der oberen Fläche (31) des Adapters (3) begrenzt ist.

11. Vorrichtung nach dem vorhergehenden Anspruch, wobei der erste und zweite zylindrische Strang (39a, 39b) denselben Innendurchmesser wie die erste und zweite Durchgangsöffnung (37a, 37b) haben und sich innerhalb des Volumens des Hohlraums (33) im Wesentlichen zueinander erstrecken.

12. Vorrichtung nach einem der Ansprüche 9 bis 11, wobei das Profil der oberen Fläche (31) des Adapters (3) im Bereich jeder der Durchgangsöffnungen (37a, 37b) mit dem Profil einer oberen Wand (25) identisch ist, welche die Flanke (23) des Verbinders (2) im Bereich des Lochs (24) begrenzt.

13. Verbindungsvorrichtung (B) für die mechanische Verbindung eines Scheibenwischerblatts (A) mit einem geraden Sidelock-Antriebsarm (C) eines Fahrzeugscheibenwischers und mit einem Standard-Sidelock-Antriebsarm (C') eines Fahrzeugscheibenwischers, wobei die Antriebsarme (C, C') jeweils eine Welle (51, 51') und eine Spindel (52, 52') umfassen, wobei jede Spindel (52, 52') allgemein L-förmig ist und mindestens einen Hauptschenkel (520, 520') und einen terminalen Schenkel (521, 521') umfasst, wobei mindestens der Hauptschenkel (520') der Spindel (52) des Standard-Sidelock-Antriebsarms (C') länger als der Hauptschenkel (520) der Spindel (52') des geraden Sidelock-Antriebsarms (C) ist, wobei die Verbindungsvorrichtung (B) umfasst:
- einen Verbinder (2), der zur festen Verbindung mit einem Scheibenwischerblatt (A) bestimmt ist und mindestens ein transversales Loch (24) umfasst, das geeignet ist, eine der Wellen (51, 51') aufzunehmen,
- einen Adapter (3), der bestimmt ist, den Verbinder (2) mit einem der Antriebsarme (C, C') zu verbinden, wobei der Adapter (3) von seitlichen Flächen (30a, 30b) und von einer oberen Fläche (310) begrenzt ist und mindestens ein Drehlager (37a, 37b) umfasst, das geeignet ist, eine der Wellen (51, 51') aufzunehmen, und ein Befestigungsmittel (390a, 390b) des Adapters (3) auf dem Verbinder (2), wobei der Adapter (3) mindestens vier Hohlräume (41) umfasst, die im Wesentlichen senkrecht zu einer transversalen Achse (Y) sind, die durch das Drehlager (37a, 37b) verläuft, wobei diese Hohlräume (41) sowohl in Bezug auf eine mittlere Längsebene, die senkrecht zu zwei im Wesentlichen ebenen Teilen (310a, 310b) der oberen Fläche (31) des Adapters (3) ist, als auch in Bezug auf eine mittlere transversale Ebene, die senkrecht zu den seitlichen Flächen (30a, 30b) des Adapters (3) ist, paarweise symmetrisch verteilt sind, wobei mindestens einer dieser Hohlräume (41) bestimmt ist, die Spindel (52) des geraden Sidelock-Antriebsarms (C) aufzunehmen, wobei der Adapter (3) mindestens eine Aussparung (340a, 340b) umfasst, die in einer der seitlichen Flächen (30a, 30b) eingerichtet ist, wobei die Aussparung (340a, 340b) ausgebildet ist, um die Spindel (52') des Standard-Sidelock-Antriebsarms (C') aufzunehmen, und wobei das Drehlager (37a, 37b), das transversale Loch (24) und das Befestigungsmittel (390a, 390b) koaxial sind.

14. Vorrichtung nach dem vorhergehenden Anspruch, wobei jeder Hohlraum (41) von einem geschlossenen Rand begrenzt ist.

15. Vorrichtung nach dem vorhergehenden Anspruch, wobei der geschlossene Rand jedes Hohlraums (41) in einem der im Wesentlichen ebenen Teile (310a, 310b) der oberen Fläche (31) des Adapters (3) eingerichtet ist.

16. Vorrichtung nach einem der Ansprüche 13 bis 15, wobei der Adapter (3) mindestens eine Aussparung (340a, 340b) auf jeder seiner seitlichen Flächen (30a, 30b) umfasst.

17. Vorrichtung nach einem der Ansprüche 13 bis 16, wobei das Drehlager (37a, 37b) ein erstes Lager (37a) und ein zweites Lager (37b) umfasst, die koaxial sind, wobei das erste Lager (37a) vom zweiten Lager (37b) durch eine Ausnehmung (40) getrennt ist, die auf der oberen Fläche (31) des Adapters (3) ausmündet.

18. Vorrichtung nach dem vorhergehenden Anspruch, wobei sich mindestens ein Abschnitt des Verbinders (2) in die Ausnehmung (40) des Adapters (3) zwischen dem ersten Drehlager (37a) und dem zweiten Drehlager (37b) erstreckt.

19. Vorrichtung nach einem der Ansprüche 13 bis 18, wobei das Befestigungsmittel des Adapters (3) auf dem Verbinder (2) die Form zylindrischer Stränge (390a, 390b) annimmt, die von dem Adapter ausgehen und in mindestens einem komplementären Loch (39a, 39b) aufgenommen sind, welches in dem Verbinder (2) eingerichtet ist.

20. Vorrichtung nach einem der Ansprüche 13 bis 19, wobei die obere Fläche (311) des Adapters im Bereich des Drehlagers (37a, 37b) einem Profil folgt, das dem einer oberen Wand (250) des Verbinders (2) im Bereich des mittelren Abschnitts desselben, in dem das transversale Loch (24) eingerichtet ist, ähnelt.

21. Scheibenwischerblatt (A) für ein Fahrzeug, insbesondere Kraftfahrzeug, **dadurch gekennzeichnet, dass** er eine Verbindungsvorrichtung (B) nach einem der vorhergehenden Ansprüche umfasst.

22. Wischersystem für ein Fahrzeug, umfassend mindestens einen Scheibenwischerblatt (A) nach Anspruch 21, der an einem Antriebsarm (C) durch eine Verbindungsvorrichtung (B) befestigt ist, wobei eine Welle (51), die von einem terminalen Teil (5) des Antriebsarms (C) getragen wird, in dem Drehlager (37a, 37b) des Adapters (3) untergebracht ist, wobei eine Spindel (52) in dem Hohlraum (41) aufgenommen ist.

23. Wischersystem für ein Kraftfahrzeug, umfassend einen Scheibenwischerblatt (A) nach Anspruch 21, der an einem Antriebsarm (C') durch eine Verbindungsvorrichtung (B) befestigt ist, wobei eine Welle (51), die von einem terminalen Teil (5) des Antriebsarms (C') getragen wird, in dem Drehlager (37a, 37b) des Adapters (3) untergebracht ist, wobei eine Spindel (52') in einer Aussparung (340a, 340b) aufgenommen ist, die in einer seitlichen Flanke (30a, 30b) des Adapters (3) eingerichtet ist.

## Claims

1. Connection device (B) for mechanically linking a wiper blade (A) to a windscreen wiper drive arm (C, C') of a motor vehicle, said connection device (B) includes a connector (2) designed to be rigidly attached to a wiper blade (A) and an adaptor (3) designed to connect the connector (2) to an end part (5, 5') of the drive arm (C, C'), the adaptor (3) being delimited by at least two lateral flanks (30a, 30b) and an upper face (31), each of the lateral flanks (30a, 30b) being attached to the upper face (31), in which the connector (2) includes at least one hole (24) of circular section through which an axis of rotation (Y) between the wiper blade (A) and the drive arm (C, C') passes, the hole (24) in the connector being delimited by at least one flank (23), the adaptor (3) having at least one through-seat (40) formed in the upper face (31) and into which at least a portion of the flank (23) of the connector (2) extends, and at least one of said lateral flanks (30a, 30b) of the adaptor (3) has a shoulder (34a, 34b) formed on an edge opposite the edge via which the lateral flank is attached to the upper face (31) of the adaptor (3), **characterized in that** four through-slots (41) are formed in the upper face (31) of the adaptor (3), distributed symmetrically both about a longitudinal mid-plane perpendicular to the substantially flat portions (310a, 310b) of the upper face (31) of the adaptor (3) and about a transverse mid-plane perpendicular to the first and second lateral flanks (30a, 30b) of the adaptor (3), each through-slot (41) being arranged to receive a pin (52) of the drive arm (C).

2. Device according to Claim 1, the at least one hole (24) having a circular section.

3. Device according to Claim 1 or 2, in which the through-seat (40) is formed in the upper face (31) delimiting the adaptor (3).

4. Device according to the preceding claim, in which the through-seat (40) is delimited by a closed edge.

5. Device according to any one of the preceding claims, in which the through-seat (40) is centred on the adaptor (3), along a longitudinal axis (X) of said adaptor (3), and borders two substantially flat portions (310a, 310b) of the upper face (31) and two substantially convex portions (311a, 311b) delimiting the upper face (31) of the adaptor (3).

6. Device according to the preceding claim, in which the through-seat (40) has, in projection on a plane parallel to the substantially flat first and second portions (310a, 310b) of the upper face (31), a substantially rectangular section in which the large side is parallel to the longitudinal axis (X) of the adaptor (3) and the small side is substantially parallel to the axis of rotation (Y).

7. Device according to any one of the preceding claims, in which each of the first and second lateral flanks (30a, 30b) of the adaptor (3) has a shoulder (34a, 34b).

8. Device according to any one of the preceding claims, in which the adaptor (3) is delimited by at least a first lateral flank (30a) and by a second lateral flank (30b), a rotary bearing being provided in said first and second lateral flanks (30a, 30b) to receive a shaft (51, 51') of the drive arm (C, C').

9. Device according to the preceding claim, in which the rotary bearing is formed by at least one orifice (37a, 37b) passing through the first and second lateral flanks (30a, 30b), having a circular section, and in that the through-orifices (37a, 37b) are coaxial and of the same diameter, their centres being aligned on the axis of rotation (Y).

10. Device according to the preceding claim, in which a first and a second cylindrical trunnions (39a, 39b) extend, coaxial with the through-orifices (37a, 37b), inside a cavity (33) delimited by the first and second lateral flanks (30a, 30b), first and second end flanks (32a, 32b), and the upper face (31) of the adaptor (3).

11. Device according to the preceding claim, in which the first and second cylindrical trunnions (39a, 39b) have the same internal diameter as the first and second through-orifices (37a, 37b), and extend substantially towards one another within the volume of said cavity (33).

12. Device according to any one of Claims 9 to 11, in which the profile of the upper face (31) of the adaptor (3), near to each of the through-orifices (37a, 37b), is identical to the profile of an upper wall (25) delimiting the flank (23) of the connector (2) near to the hole (24).

13. Connection device (B) for mechanically linking a wiper blade (A) to a vehicle windscreen wiper narrow side-lock drive arm (C) and to a vehicle windscreen wiper standard side-lock drive arm (C'), the drive arms (C, C') comprising, each, a shaft (51,51') and a pin (52, 52'), each pin (52, 52') having a substantially L-shape and comprising at least a main branch (520,520') and an end branch (521,521'), at least the main branch (520') of the pin (52') of the standard side-lock drive arm (C') being longer than the main branch (520) of the pin (52) of the narrow side-lock drive arm (C), the connection device (B) comprising:
- a connector (2) designed to be rigidly attached to the wiper blade (A) and having at least one transverse hole (24) designed to receive one of the shafts (51, 51'),
- an adaptor (3) designed to connect the connector (2) to one of the drive arm (C, C'), the adaptor (3) being delimited by lateral faces (30a, 30b) and by an upper face (310) and including at least one rotary bearing (37a, 37b) designed to receive one of the shafts (51, 51') and means (390a, 390b) for attaching the adaptor (3) to the connector (2), the adaptor (3) having at least four cavities (41) that are substantially perpendicular to a transverse axis (Y) passing through the rotary bearing (37a, 37b), these cavities (41) being distributed symmetrically in pairs both about a longitudinal mid-plane perpendicular to two substantially flat portions (310a, 310b) of the upper face (31) of the adaptor (3) and about a transverse mid-plane perpendicular to the lateral faces (30a, 30b) of the adaptor (3), at least one of these cavities (41) being designed to receive the pin (52) of the narrow side-lock drive arm (C), the adaptor (3) including at least one gap (340a, 340b) formed in one of said lateral faces (30a, 30b), the gap (340a, 340b) being designed to receive the pin (52') of the standard side-lock drive arm (C'), and in which the rotary bearing (37a, 37b), the transverse hole (24) and the means (390a, 390b) for attaching are coaxial.

14. Device according to the preceding claim, in which each cavity (41) is delimited by a closed edge.

15. Device according to the preceding claim, in which the closed edge of each cavity (41) is formed in one of the substantially flat portions (310a, 310b) of the upper face (31) of the adaptor (3).

16. Device according to any one of Claims 13 to 15, in which the adaptor (3) includes at least one gap (340a, 340b) on each of its lateral faces (30a, 30b).

17. Device according to any one of Claims 13 to 16, in which the rotary bearing (37a, 37b) has a first bearing (37a) and a second bearing (37b) that are coaxial, the first bearing (37a) being separated from the second bearing (37b) by a recess (40) that opens onto the upper face (31) of the adaptor (3).

18. Device according to the preceding claim, in which at least one portion of the connector (2) projects into the recess (40) of the adaptor (3) between the first bearing (37a) and the second rotary bearing (37b).

19. Device according to any one of Claims 13 to 18, in which the means for attaching the adaptor (3) to the connector (2) are cylindrical trunnions (390a, 390b) coming from the adaptor and seated in at least one matching hole (39a, 39b) formed in the connector (2).

20. Device according to any one of Claims 13 to 19, in which the upper face (311) of the adaptor, near to the rotary bearing (37a, 37b), has a profile similar to the profile of an upper wall (250) of the connector (2) near to the central portion of this latter, in which the transverse hole (24) is formed.

21. Wiper blade (A) for a vehicle, in particular a motor vehicle, **characterised in that** it includes a connection device (B) according to anyone of the preceding claims.

22. Wiper system for a vehicle, including at least one wiper blade (A) according to Claim 21 attached to a drive arm (C) by a connection device (B), a shaft (51) carried by an end part (5) of the drive arm (C) being seated in the rotary bearing (37a, 37b) of the adaptor (3), a pin (52) being seated in the cavity (41).

23. Wiper system for a motor vehicle, including one wiper blade (A) according to Claim 21 attached to a drive arm (C') by a connection device (B), a shaft (51) carried by an end part (5) of the drive arm (C') being seated in the rotary bearing (37a, 37b) of the adaptor (3), a pin (52') being seated in a gap (340a, 340b) formed in a lateral flank (30a, 30b) of the adaptor (3).
